(19) **Europäisches Patentamt European Patent Office Office européen des brevets**

(11) **EP 2 188 035 B1**

(12) **EUROPEAN PATENT SPECIFICATION**

(45) Date of publication and mention of the grant of the patent:
**18.09.2013 Bulletin 2013/38**

(51) Int Cl.:
**B01D 53/00** [(2006.01)] **B01D 53/14** [(2006.01)]
**B01J 19/00** [(2006.01)]

(21) Application number: **08795001.0**

(22) Date of filing: **01.08.2008**

(86) International application number:
**PCT/US2008/009352**

(87) International publication number:
**WO 2009/017832 (05.02.2009 Gazette 2009/06)**

(54) **METHODS FOR APPLYING MICROCHANNELS TO SEPARATE GASES USING LIQUID ABSORBENTS, ESPECIALLY IONIC LIQUID (IL) ABSORBENTS**

VERFAHREN ZUR ANWENDUNG VON MIKROKANÄLEN AUF SEPARATE GASE UNTER VERWENDUNG VON FLÜSSIGEN ABSORPTIONSMITTELN, INSBESONDERE IONISCHE FLÜSSIGKEITEN UMFASSENDEN ABSORPTIONSMITTELN

PROCÉDÉS D'UTILISATION DE MICROCANAUX POUR SÉPARER DES GAZ EN UTILISANT DES ABSORBANTS LIQUIDES, EN PARTICULIER DES ABSORBANTS À LIQUIDE IONIQUE (IL)

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **01.08.2007 US 962784 P**
**01.08.2007 US 962786 P**
**01.08.2008 US 184877**
**01.08.2008 US 184843**

(43) Date of publication of application:
**26.05.2010 Bulletin 2010/21**

(73) Proprietor: **Velocys, Inc.**
**Plain City, OH 43064 (US)**

(72) Inventors:
• **TONKOVICH, Anna Lee Y.**
**Dublin, OH 43064 (US)**
• **LITT, Robert D.**
**Plain City, OH 43064 (US)**
• **ARORA, Ravi**
**Plain City, OH 43064 (US)**
• **QIU, Dongming**
**Plain City, OH 43064 (US)**
• **LaMONT, Micheal Jay**
**Plain City, OH 43064 (US)**
• **FANELLI, Maddalena**
**Plain City, OH 43064 (US)**
• **SIMMONS, Wayne W.**
**Plain City, OH 43064 (US)**
• **SILVA, Laura J.**
**Plain City, OH 43064 (US)**
• **PERRY, Steven**
**Galloway, OH 43119 (US)**

(74) Representative: **Watson, Craig Simon**
**Murgitroyd & Company**
**Scotland House**
**165-169 Scotland Street**
**Glasgow G5 8PL (GB)**

(56) References cited:
**WO-A1-2006/010068    WO-A2-2005/105665**
**US-A- 5 504 968    US-A1- 2003 221 554**
**US-A1- 2005 045 030    US-A1- 2005 265 915**
**US-A1- 2006 251 558**

• **STAUDINGER ET AL.: 'A critical compilation of Henry's law constant temperature dependence relations for organic compounds in dilute aqueous solutions' CHEMOSPHERE, [Online] August 2001, pages 561 - 576, XP008130528 Retrieved from the Internet: <URL:http: //www.sciencedirect.com/science?_ ob=ArticleURL&_udi=B6V74-43C5C63-7&_ user=10 &_rdoc=1&_fmt=&_orig=search&_ sort=d&view=c& _acct=C000050221&_ version=1&_urlVersion=0&_ userid=10&md5=9282296b2da08d3438aad7be3d d5b 327>**

**EP 2 188 035 B1**

**Description**

BACKGROUND OF THE INVENTION

The present invention relates to methods of separating gasses and, more particularly to the methods of separating gasses using microchannel devices and ionic liquid absorbents.

The Losey paper describes a contacting method for a gas and a liquid reaction system but does not suggest absorption- desorption as a potential unit operation. Matthew W. Losey et al, "Microfabricated Multiphase Packed- Bed Reactors: Characterization of Mass Transfer and Reactions, " Ind. Eng. Chem. Res. 2001, 40, 2555- 2562. "Solubilities and Thermodynamic Properties of Gases in the Ionic Liquid 1- n- Butyl- 3- methylimidazolium Hexafluorophosphate", Anthony, J., Maginn, E., and Brennecke, J., J. Phys. Chem B 2002, 106, 7315- 7320, describes one example of an ionic liquid that suggests a single stage separation of methane and nitrogen are possible.

The use of wicks or capillary structures for thin film is described in U.S. Patent Nos. 7,051,540 and 6,875,247. Surface features for multiphase processing are discussed in U.S. Patent Application Publication Nos. 2007/0085227, 2007/0017633, and 2006/0073080.

Gas separations are discussed in U.S. Patent Nos. 6,579,343 and 6,623,659, U.S. Patent Application Publication No. 2006/0251558, and PCT Published Application No. WO 02/34863.

Options for the absorption and desorption of SO2 from flue gas independently or in conjunction with CO2 absorption and desorption have been considered by a few researchers (Wu, W., Han, B., Gao, H., Liu, Z., Jiang, T., Huang, J., "Desulfurization of flue gas: SO2 absorption by an ionic liquid," Angew. Chem. Int. Ed., vol. 43, pp. 2415-2417, 2004; Anderson, J.L., Dixon, J.K, Maginn, E.J., Brennecke, J.F., "Measurement of SO2 solubility in ionic liquids," The Journal of Physical Chemistry B, vol. 110, no. 31, pp. 15059-15062, 2006). Problems with typical wet and dry absorption techniques, including large water requirements and post-absorption treatment, dust formation and sorbent poisoning, plugging, or deactivation have led to consideration of ionic liquids as potential sorbents.

Foam flow is discussed in Stemmet,C.P., Jongmans, J.N., van der Schaaf, J., Kuster, B.F.M., Schouten, J.C., "Hydrodynamics of gas-liquid counter-current flow in solid foam packings," Chemical Engineering Science, 60, 6422-6429, 2005; Stemmet,C.P., van der Schaaf, J., Kuster, B.F.M., Schouten, J.C., "Solid Foam Packings for Multiphase Reactors - Modelling of Liquid Holdup and Mass Transfer," Trans. ChemE, Part A, Chemical Engineering Research and Design, 84 (A12), 1134-1141, 2006; and Stemmet,C.P., Meeuwse, M., van der Schaaf, J., Kuster, B.F.M., Schouten, J.C., "Gas-liquid mass transfer and axial dispersion in solid foam packings," Chemical Engineering Science, 62, 5444-5450, 2007.

WO2005105665 and US2005265915 both disclose methods and apparatuses that utilize microchannels technology and, more specifically in exemplary form, producing hydrogen peroxide using microchannel technology. They also describe an exemplary process for producing hydrogen peroxide comprising flowing feed streams into intimate fluid communication with one another within a process microchannel to form a reactant mixture stream comprising a hydrogen source and an oxygen source such as hydrogen gas and oxygen gas. Thereafter, a catalyst is contacted by the reactant mixture and is operative to convert a majority of the reactant mixture to hydrogen peroxide that is withdrawn via an egressing product stream. During the hydrogen peroxide chemical reaction, exothermic energy is generated. This exothermic energy is absorbed by the fluid within the microchannel as well as the microchannel itself. In a preferred embodiment, a heat exchange fluid is in thermal communication with the microchannel housing the exothermic reaction and is operative to absorb a portion of this exothermic energy and transfer such energy from the microchannel.

US2003221554 describes a microchannel contactor and methods of contacting substances in microchannel apparatus and also some preferred embodiments which are combined with microchannel heat exchange.

INTRODUCTION TO THE INVENTION

Embodiments of the present invention include methods of using microchannel separation systems including absorbents to improve thermal efficiency and reduce parasitic power loss. Energy is typically added to desorb a solute and then energy or heat is removed to absorb a solute using a working solution. The working solution or absorbent may comprise an ionic liquid, or other fluids that demonstrate a difference in affinity between a solute and other gasses in a solution.

The application of microchannels separation systems using absorbents represents an opportunity for improved efficiency by integrating a complete system and reducing parasitic power loss. Energy is typically added to desorb the solute and then removed to absorb the solute using the working solution. The working solution or absorbent may comprise an ionic liquid, an amine solution for primarily carbon dioxide or H2S separation, or other fluids that demonstrate a difference in affinity between two or more solutes.

An ionic liquid is one absorbent option that can be sued in its pure form or in conjunction with water or other solvent. Ionic liquids have a relatively low (below 100°C) melting point and are typically liquid at room temperature.

According to the present invention, there is provided a method of separating components of a fluid, said method being as defined in claim 1.

In a first aspect, a method for separating gaseous components according to the present invention may include contacting a gaseous mixture with an ionic liquid by flowing the gaseous mixture and the ionic liquid through a micro-channel; absorbing at least a portion of a first component of the gaseous mixture by the ionic liquid, thereby creating a resultant mixture including a resultant gas and the ionic liquid; directing the resultant gas away from the ionic liquid; and desorbing at least some of the first component gas from the ionic liquid by changing the temperature of the ionic liquid.

In a detailed embodiment of the first aspect, the step of desorbing at least some of the first component gas may include raising the temperature of the ionic liquid. In another detailed embodiment of the first aspect, the step of desorbing at least some of the first component gas may include lowering the temperature of the ionic liquid. In yet another detailed embodiment of the first aspect, the step of desorbing at least some of the first component gas includes lowering the pressure of the ionic liquid. In still another detailed embodiment of the first aspect, the method may include the step of changing the temperature of the ionic liquid prior to the step of absorbing at least a portion of the first component gas.

In another detailed embodiment of the first aspect, the step of desorbing at least some of the first component gas may include raising the pressure of the ionic liquid. In a further detailed embodiment, the step of changing the temperature of the ionic liquid may include lowering the temperature of the ionic liquid. In another further detailed embodiment, the step of changing the temperature of the ionic liquid may include raising the temperature of the ionic liquid. In still another further detailed embodiment, thermal energy extracted from the ionic liquid in one of the desorbing and changing the temperature steps may be supplied to the ionic liquid in the other of the desorbing and changing the temperature steps.

In another detailed embodiment of the first aspect, the microchannel may include at least one flow mixing feature. In a further detailed embodiment, the flow mixing feature may include a porous packed bed including at least one of rings and spheres. In another further detailed embodiment, the flow mixing feature may include a porous foam, felt, wad and/or other porous structure continuous for at least a length greater than a length of three hydraulic diameters of the microchannel, wherein the porosity is less than one. In another exemplary embodiment, the chamber that houses the foam structure may range from 2 mm to 50 mm, for example, and a microchannel dimension may be found elsewhere in the process, including integrated heat or mass exchangers or mixers. In an alternate embodiment, the effluent from a large absorption section may feed to two or more channels downstream, wherein the channels are in the microchannel dimension and wherein the channels are used for heat or mass exchange or mixing.

In another detailed embodiment of the first aspect, the contacting step may include flowing the gaseous mixture and the ionic liquid co-currently through the microchannel. In yet another detailed embodiment of the first aspect, the contacting step may include flowing the gaseous mixture counter-currently to the ionic liquid through the microchannel.

In still another detailed embodiment of the first aspect, the microchannel may include a a foam, wad, and/or mesh. In a further detailed embodiment, the flowing step may include wetting the foam, wad, and/or mesh with the ionic liquid. In another further detailed embodiment, the microchannel may include a foam constructed from aluminum, carbon, copper, nickel, stainless steel, alumina, silicon carbide, and/or other structurally sound foam or other porous material. In yet another further detailed embodiment, the microchannel may include a foam coated with a material to increase the wetting over the underlying material. In still another further detailed embodiment, the microchannel may include a plurality of foams having different pore densities.

In another detailed embodiment of the first aspect, the gaseous mixture may include methane and nitrogen. In a further detailed embodiment, the first component gas may include methane and the resultant gas may include nitrogen.

In another detailed embodiment of the first aspect, the gaseous mixture may include carbon dioxide. In a further detailed embodiment, the first component gas may include carbon dioxide.

In another detailed embodiment of the first aspect, the first component gas may include oxygen gas. In yet another detailed embodiment of the first aspect, the first component gas may include a nitrogen compound. In still another detailed embodiment of the first aspect, the method may include the step of using the resultant gas in a subsequent process. In another detailed embodiment of the first aspect, the first component gas may include at least one of nitrogen, hydrogen sulfide, ammonia, $Ni(CO)_4$, and a thiol.

In another detailed embodiment of the first aspect, the ionic liquid may have been diluted to reduce the viscosity by at least 5% from the neat material. In a further detailed embodiment, the ionic liquid may have been diluted with greater than 0.1% water.

In a second aspect, a method for separating component gases from a gaseous mixture according to the present invention may include the steps of providing a gaseous mixture including a first component gas and a second component gas; flowing a first ionic liquid and the gaseous mixture through a first microchannel; absorbing at least a portion of the first component gas into the first ionic liquid while the first ionic liquid and the gaseous mixture flow through the first microchannel, thereby forming a first resultant mixture including a first resultant gas and the first ionic liquid; flowing the first resultant mixture into a first liquid/gas separator; directing the first resultant gas away from the first ionic liquid using the first liquid/gas separator; desorbing at least a portion of the first component gas from the first ionic liquid by changing the temperature of the first ionic liquid; flowing a second ionic liquid and the first resultant gas into a second microchannel; absorbing at least a portion of the second component gas into the second ionic liquid while the second ionic liquid and the separated first resultant gas flow through the second microchannel, thereby forming a second resultant mixture including a second resultant gas and the second ionic liquid; flowing the second resultant mixture into a second liquid/gas separator; directing the second resultant gas away from the second ionic liquid using the second liquid/gas separator; and desorbing at least a portion of the second component gas from the second ionic liquid by changing the temperature of the second ionic liquid. In a similar fashion, more than two ionic liquids may be used in sequential processing steps of the cycle. In exemplary embodiments, two or more ionic liquids may be used in sequential processing steps.

The foregoing is a summary and thus contains, by necessity, simplifications, generalization, and omissions of detail; consequently, those skilled in the art will appreciate that the summary is illustrative only and is not intended to be in any way limiting. Other aspects, features, and advantages of the devices and/or processes and/or other subject matter described herein will become apparent in the teachings set forth herein.

In a third aspect, a microchannels device for use in the present invention may include a first plurality of microchannels; and a second plurality of microchannels, each of the second plurality of microchannels being separated from at least one of the first plurality of microchannels by one of a plurality of walls. At least one of the walls may include a plurality of voids, the voids being arranged to permit heat transfer from one of the first plurality of microchannels to one of the second plurality of microchannels while reducing heat conduction along a length of the wall.

In a fourth aspect, a processing system for use in the present invention may include a first microchannel including a first absorbent inlet, a first absorbent outlet, a feed stream inlet, and a first resultant gas outlet; a second microchannel including a second absorbent inlet, a second absorbent outlet, and a second resultant gas outlet, the second microchannel being arranged in a counterflow arrangement relative to the first microchannel; an absorbent circulating through the first microchannel and the second microchannel. The absorbent may have a temperature T1 at the first inlet, a temperature T2 and the first outlet, a temperature T3 at the second inlet, and a temperature T4 at the second outlet. At least one of the following conditions may be satisfied: T2 is greater than T3 and T1 is greater than T4.

In a detailed embodiment of the fourth aspect, the absorbent may have a Henry's law constant that increases with temperature and T4 may be greater than T2. In another detailed embodiment of the fourth aspect, the feed stream inlet may receive a flue gas feed including nitrogen and carbon dioxide, the first resultant gas outlet may exhaust a first resultant gas having a higher concentration of nitrogen than the flue gas feed, and the second resultant gas outlet may exhaust a second resultant gas having a higher concentration of carbon dioxide than the flue gas feed. In another detailed embodiment of the fourth aspect, the feed stream inlet may receive a mixture including at least one hydrocarbon and nitrogen, the first resultant gas outlet may exhaust a first resultant gas having a higher concentration of nitrogen than the mixture, and the second resultant gas outlet may exhaust a second resultant gas having a higher concentration of the at least one hydrocarbon than the mixture.

In another detailed embodiment of the fourth aspect, the feed stream inlet may receive a mixture including at least one hydrocarbon and at least one contaminant, the first resultant gas outlet may exhaust a first resultant gas having a higher concentration of the hydrocarbon than the mixture, and the second resultant gas outlet may exhaust a second resultant gas having a higher concentration of the contaminant than the mixture. In a further detailed embodiment, the mixture may be a natural gas feed and the contaminant may include at least one of H2S, a thiol, and another sulfur-containing compound.

In another further detailed embodiment, the system may include a first Fischer-Tropsch reactor, where the feed stream inlet is coupled to an outlet of the Fischer-Tropsch reactor. In a still further detailed embodiment, the system may include a second Fischer-Tropsch reactor and at least one of the first resultant gas outlet and the second resultant gas outlet may be coupled to an inlet of the second Fischer-Tropsch reactor.

In another detailed embodiment of the fourth aspect, a difference between T1 and T4 may be less than 10 C. In a further detailed embodiment, the difference between T1 and T4 may be less than 5 C. In a still further detailed embodiment, the difference between T1 and T4 may be less than 2 C. In a further detailed embodiment, the difference between T1 and T4 may be less than 1 C.

In another detailed embodiment of the fourth aspect, a difference between T2 and T3 may be less than 10 C. In a further detailed embodiment, the difference between T2 and T3 may be less than 5 C. In a still further detailed embodiment, the difference between T2 and T3 may be less than 2 C. In a further detailed embodiment, the difference between T2 and T3 may be less than 1 C.

In a fifth aspect, a processing system for use in the present invention may include a first microchannel including a first absorbent inlet, a first absorbent outlet, a feed stream inlet, and a first resultant gas outlet; a second microchannel including a second absorbent inlet, a second absorbent outlet, and a second resultant gas outlet, the second microchannel being arranged in a counterflow arrangement relative to the first microchannel; an absorbent circulating through the first microchannel and the second microchannel. The absorbent may have a temperature T1 at the first inlet, a temperature T2 and the first outlet, a temperature T3 at the second inlet, and a temperature T4 at the second outlet. At least one of the following conditions may be satisfied: T3 is greater than T2, T4 is greater than T1, and T2 is greater than T4.

In a detailed embodiment of the fifth aspect, the feed stream inlet may receive a mixture including nitrogen and oxygen, the first resultant gas outlet may exhaust a first resultant gas having a higher concentration of nitrogen than the mixture, and the second resultant gas outlet may exhaust a second resultant gas having a higher concentration of oxygen than the mixture.

In another detailed embodiment of the fifth aspect, the feed stream inlet may receive a mixture including at least one hydrocarbon and at least one contaminant, the first resultant gas outlet may exhaust a first resultant gas having a higher concentration of the hydrocarbon than the mixture, and the second resultant gas outlet may exhaust a second resultant gas having a higher concentration of the contaminant than the mixture. In a further detailed embodiment, the mixture may be a natural gas feed and the contaminant may be at least one of $H_2S$, a thiol, and another sulfur-containing compound. In another further detailed embodiment, the system may include a first Fischer-Tropsch reactor, where the feed stream inlet is coupled to an outlet of the Fischer-Tropsch reactor. In a still further detailed embodiment, the system may include a second Fischer-Tropsch reactor and at least one of the first resultant gas outlet and the second resultant gas outlet may be coupled to an inlet of the second Fischer-Tropsch reactor.

In another detailed embodiment of the fifth aspect, a difference between T1 and T4 may be less than 10 C. In a further detailed embodiment, the difference between T1 and T4 may be less than 5 C. In a still further detailed embodiment, the difference between T1 and T4 may be less than 2 C. In a further detailed embodiment, the difference between T1 and T4 may be less than 1 C.

In another detailed embodiment of the fifth aspect, a difference between T2 and T3 may be less than 10 C. In a further detailed embodiment, the difference between T2 and T3 may be less than 5 C. In a still further detailed embodiment, the difference between T2 and T3 may be less than 2 C. In a further detailed embodiment, the difference between T2 and T3 may be less than 1 C.

In a sixth aspect, a processing device for use in the present invention may include a pump having an suction and a discharge and a plurality of microchannels, each of the plurality of microchannels having an inlet and an outlet. Each of the inlets may be directly fluidically connected to the discharge and each of the outlets may be directly fluidically connected to the suction.

In a detailed embodiment of the sixth aspect, the inlets may be arranged radially around the discharge. In a further detailed embodiment, the inlets may be symmetrically arranged.

In another detailed embodiment of the sixth aspect, the outlets may be arranged radially around the suction. In a further detailed embodiment, the outlets may be symmetrically arranged.

In a seventh aspect, a method of processing a material may include forming a plurality of miscelles in an ionic liquid in a microreactor; crystallizing the miscelles to form crystals; and separating the crystals from the ionic liquid.

In a detailed embodiment of the seventh aspect, the step of forming a plurality of miscelles in an ionic liquid may include controlling at least one of temperature, residence time, and addition of reactants.

In an eighth aspect, a method of processing a material may include flowing two fluids into a microchannel, the two fluids including a continuous phase and a discontinuous phase, at least one of the continuous phase and discontinuous phase including an ionic liquid; and combining the continuous phase and the discontinuous phase in the microchannel to form at least one of an emulsion and a dispersion.

In a detailed embodiment of the eighth aspect, the step of combining the continuous phase and the discontinuous phase may include controlling at least one of temperature, residence time, and addition of reactants.

In a ninth aspect, an emulsion may include a continuous phase and a discontinuous phase, where at least one of the continuous phase and the discontinuous phase is an ionic liquid.

In a detailed embodiment of the ninth aspect, the continuous phase may be an ionic liquid. In a further detailed embodiment, the discontinuous phase may include a plurality of micelles.

The foregoing is a summary and thus contains, by necessity, simplifications, generalization, and omissions of detail; consequently, those skilled in the art will appreciate that the summary is illustrative only and is not intended to be in any way limiting. Other aspects, features, and advantages of the devices and/or processes and/or other subject matter described herein will become apparent in the teachings set forth herein.

BRIEF DESCRIPTION OF THE SEVERAL VIEWS OF THE DRAWING

The detailed description particularly refers to the accompanying Figures in which:

FIG. 1 is a diagram showing an exemplary process for extracting CO2 from a flue gas feed;

FIG. 2 is a schematic diagram of an exemplary thermal compressor utilizing an ionic liquid;

FIG. 3 is a schematic diagram of an exemplary thermal compressor utilizing an ionic liquid and an absorption refrigeration cycle;

FIG. 4 is a diagram of an exemplary absorption/desorption process of carbon dioxide into an ionic liquid for separation;

FIG. 5 is a cross-sectional view of an exemplary microchannel heat exchanger core;

FIG. 6 is a plot of temperature versus heat exchanger length showing a calculated temperature profile of an exemplary microchannel heat exchanger.

FIG. 7 is a cross-sectional view of an exemplary jet-enhanced contactor;

FIG. 8 is a diagram of an exemplary multi-stage integrated system for the capture of hydrocarbons;

FIG. 9 is a cross-sectional view of an exemplary gas liquid contactor using an apertured substrate;

FIG. 10 is a cross-sectional view of an exemplary gas liquid contacting unit;

FIG. 11 is an isometric view of an exemplary macromanifold arrangement in a typical microchannel reactor box;

FIG. 12 is a diagram of an exemplary macromanifold arrangement;

FIG. 13 is a diagram of an exemplary macromanifold arrangement having a reduced macromanifold volume;

FIG. 14 depicts and exemplary absorption and desorption system

FIG. 15 is a diagram of an exemplary system for removing CO2 from a flue gas feed;

FIG. 16 is a diagram of an exemplary integrated absorption desorption system in a single block to recuperate heat from the two half cycles to reduce the overall parasitic power loss;

FIG. 17 is a diagram of an exemplary system for efficiently transferring energy between absorption and desorption cycles to reduce parasitic power use;

FIG. 18 is a diagram of an exemplary separation system for the purification of oxygen from air;

FIG. 19 is an isometric view of an exemplary solid foam processing device;

FIG. 20 is an isometric view of an alternative exemplary solid foam processing device;

FIG. 21 is a cross-sectional view of an exemplary feed port assembly;

FIG. 22 is an exploded isometric view of an exemplary feed port assembly;

FIG. 23 is an exploded isometric view of an exemplary feed port assembly;

FIG. 24 is a cross-sectional view of an alternative exemplary feed port assembly.

FIG. 25 is an exploded isometric view of an alternative exemplary feed port assembly;

FIG. 26 is a detailed exploded isometric view of an alternative exemplary feed port assembly;

FIG. 27 is a diagram of an exemplary multiphase manifold where the liquid inlet is substantially in contact with the foam or the continuous connected porous media;

FIG. 28 is a diagram showing an exemplary process for the purification of methane from a mixture comprising methane and nitrogen;

FIG. 29 is a diagram showing an exemplary integrated absorption/desorption system in a single block to recuperate heat from the two half cycles to reduce the overall parasitic power loss;

FIG. 30 is an alternate exemplary system for efficiently transferring energy between absorption and desorption cycle to reduce parasitic power use;

FIG. 31 is a diagram showing an exemplary heat recuperation concept in a absorption/desorption process of methane into ionic liquid for separation;

FIG. 32 is piping and instrumentation diagram of an exemplary microchannel test stand;

FIG. 33 is an isometric view of an exemplary microchannel device;

FIG. 34 is diagram showing exemplary embedded mixing features in a microchannel device;

FIG. 35 is that graphical result of a computational fluid dynamics simulation of the flow patterns (as shown by fluid path lines that trace the movement) during the mixing of a gas and liquid in the microchannel device of FIG. 34;

FIG. 36 is detailed view of detail A of the result of the computational dynamics simulation of FIG. 35;

FIG. 37 is detailed view of detail B of the result of the computational dynamics simulation of FIG. 35;

FIG. 38 is a piping and instrumentation of an exemplary microchannel test stand;

FIG. 39 is an isometric view of an exemplary microchannel device;

FIG. 40 is a detailed view of an exemplary port plug of the exemplary microchannel device of FIG. 39;

FIG. 41 is a detailed overhead view of the exemplary microchannel device of FIG. 39 with the port plugs removed;

FIG. 42 is a diagram of an exemplary knock-out pot used in the exemplary microchannel device of FIG. 39; and

FIG. 43 is a plot of pressure drop versus liquid flow rate for 100 sccm vapor and varying liquid flow rates.

DETAILED DESCRIPTION OF THE INVENTION

In the following detailed description, reference is made to the accompanying drawings, which form a part hereof. In the drawings, similar symbols typically identify similar components, unless context dictates otherwise. The illustrative embodiments described in the detailed description, drawings, and claims are not meant to be limiting.

Exemplary embodiments include a thermally efficient system that includes at least an absorption, desorption, and recuperative heat exchange unit operation. At least two of these may integrated into a single microchannel apparatus. In some embodiments, all three are integrated into a single microchannel apparatus.

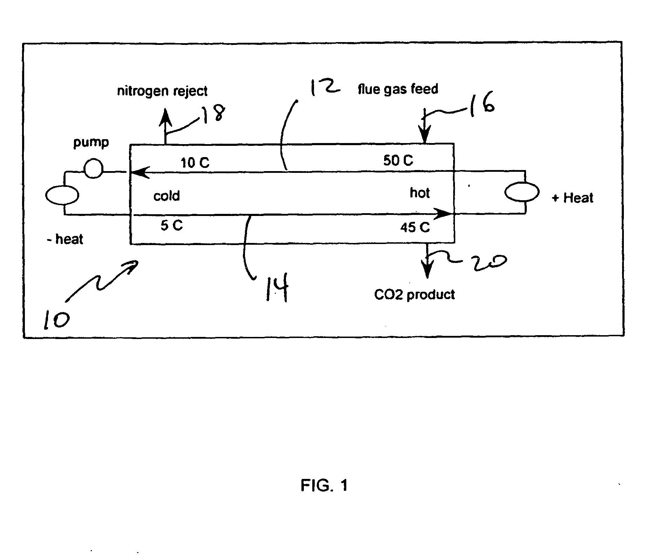

As shown in FIG. 1, in exemplary three unit operations of absorption, desorption, and recuperation integrated in a single microchannel apparatus 10, four critical temperatures are defined where T1 is the inlet temperature of the absorbent at the start of the absorption channel 12, T2 is the outlet temperature of the absorbent at the end of the absorption section of the channel 12, T3 is the inlet temperature at the start of the desorption channel 14 and T4 is the outlet temperature of the desorption channel 14, wherein T2 is greater than T3 and/or T1 is greater than T4. For an exemplary system, heat flows from the absorption unit operation to the desorption unit operation.

The applied temperature gradients while counterintuitive aid in the recuperation of energy between absorption and desorption. Close approach temperatures are desired between either the T1 and T4 streams at one end of the apparatus, the T2 and T3 streams at one end of the apparatus, or both the T1 and T4 streams and the T2 and T3 streams. The approach temperature between the T1 and T4 end of the apparatus may be less than 10 C, or less than 5C, or less than 2C, or less than 1 C, or in exemplary embodiments between 0.05 and 1 C. The approach temperature between the T2 and T3 end of the apparatus may be less than 10 C, or less than 5C, or less than 2C, or less than 1 C, or in exemplary embodiments between 0.05 and 1 C. A small amount of energy must be augmented or added to the absorption fluid as it flows from the desorption 14 to the absorption 12 channel. A small amount of energy must be removed from the absorbent as it flows from the absorption to the desorption channel. Further T4 must be greater than T2 for absorbents whose Henry's law constants increase with temperature.

In an alternate embodiment where the Henry's law constant decreases with temperature, as that reported for oxygen in BmimPF6 ionic liquid, then the reverse temperature profile is desirable where T2 is greater than T4 and T3 is greater than T2 and or T4 is greater than T1.

In other embodiments, the parasitic power loss for the absorption system is less than 20% of the system produced power, and less than 10% in some embodiments.

In an alternate embodiment, the process is used to capture dilute amounts of a solute 20, roughly less than 30% of the inlet feed stream 16. In this case, the thermal integration scheme may vary and may not need to be as highly integrated. In one embodiment, the absorption occurs in a near isothermal zone, as defined by a gradient less than 50 C, or less than 20 , or less than 10 C. The unsorbed species 18 travel through the microchannel absorption unit operation to a second unit operation for downstream processing, while the dilute species is captured for either use elsewhere within a process system, or disposal as a waste product. As an example, this technology could be used to capture H2S, NH3, Ni-CO, or any other dilute species to clean a fluid stream for subsequent downstream processing in a reactor, separator, mixer, heat exchanger, or other chemical unit operation. The advantage for the capture of the dilute species in a microchannel apparatus is the reduced footprint and cost which creates attractive flowsheets for both small capacity process systems or large scale systems. As an example, this separation scheme could be useful for a small scale gas-to-liquids facility to clean up or remove dilute unwanted species from the synthesis gas generated from a gassifier, autothermal reformer, partial oxidation reactor, steam reformer or any other reactor. Further, the clean up technology could be applied to remove H2S, thiols, other sulfur bearing species, or other contaminants from natural gas as found in pipelines, natural gas wells, or other sources of hydrocarbon feedstocks. The exemplary process has applications as a gas clean up step for other technologies, including removing contaminants from any hydrocarbon-laden stream, air, high purity gases for electronics, welding, or any other application, where the purity must exceed 90% of a desired component, and more than 95% purity. Applications may also include methanol synthesis, synthesis of organic liquids or gases, or the purification of inorganic fluids.

Exemplary embodiments may include thin film separations. For example, mesh flow with counterflow of feeds such that the flow of the liquid absorbent is retained or constrained within a channel or structure by the use of capillary forces that minimize the mixing or back mixing of a liquid and a gas in a microchannel.

Exemplary embodiments may include mixed phase flow using surface features, for example a one pass process with co-flow feeds. The fluid mixture of liquid and gas are co-fed either inside or outside of the microchannel device and flow in a co-flow arrangement. The fluid is pushed and pulled in and out of the surface features.

Exemplary embodiments may include multiphase flow through packed bed with co-flow of feeds. The gas and liquid flow in a co-flow arrangement and are mixed to create a high interfacial area by flowing past a series of obstructions in the form of posts, baffles, and/or a porous packed bed of rings, spheres, or other shapes.

Exemplary embodiments may include contactor based absorption and desorption unit operations where a thin contactor plate separates the phases to assist with countercurrent flow. The contactor plate has sufficiently small apertures such that capillary pressure of the liquid retains the liquid on one side of the contactor plate and the gaseous stream on the other side of the contactor plate.

Exemplary embodiments may include foam flow, where the gas and liquid stream flow substantially through a foam, wad, mesh or other porous and connected media. The connected media may be assembled with the close coupling of several porous media, such as a stack of foams rather than assembled from a discontinuous array of particles such as pellets or beads. The flow of gas and liquid sorbent through the foam may be countercurrent or co-current. The liquid preferentially wets the foam or continuous and connected media to increase the surface area and absorbs one or more species during the absorption cycle and desorbs one or more species during the desorption cycle.

Exemplary systems including multiple unit operations may be configured to reduce the amount of additional energy or power required to drive the separation process. For example, an exemplary microchannel absorber uses an ionic liquid to absorb a solute gas from a feed gas comprising same. The feed gas flows into the absorber at a first temperature and pressure. The solute is preferably absorbed into the ionic liquid or other absorbent, while the less strongly absorbed solute, which has much less affinity to absorption by the ionic liquid or other absorbent, passes through and exits the absorber as a lean gaseous stream.

The solute may be desorbed in a second unit operation. Increasing the temperature reduces the affinity for the absorbed solute and therefore desorbs the solute. For example, the Henry's constant for oxygen is 23000 bar at 10 C and drops to 1550 bar at 50 C. The temperature of an absorbed mixture of oxygen and BmimPF6 would be decreased to desorb the oxygen. Alternative ionic liquids or other absorbents may have a different response of a cold absorption and hot desorption. In another exemplary embodiment, the temperature may be either increased or decreased to assist with the desorption of the solute and/or the pressure may be decreased to also assist with the desorption of the solute.

Other exemplary embodiments include single unit operation with a cold and a hot end to recuperate energy between absorption and desorption to improve the energy recovery and system efficiency. Also, two unit operations (one cold and one hot), where energy is recuperated between the unit operations to reduce the parasitic power requirement. In another exemplary embodiment, a distillation type configuration includes an interior feed point and a concentrated methane stream removed at the top of the channel and a concentrated nitrogen stream removed at the bottom of the column. Heat may be required to add or remove at the top and or bottom or interior points of the channel.

A solute may have little or no affinity in the liquid absorbent and may be removed at the end of the absorption channel, while the sorbed species are absorbed into the liquid. The liquid may be pumped to a desorption stage, where the sorbed gases or liquids are removed. A single stage absorption may be required.

If the undesired absorbate is partially absorbed in a selected ionic liquid, then multiple stages may be required and a counter flow of the liquid and gas may be advantageous.

Exemplary embodiments may perform CO2 removal from a stream to either purify a product stream or to capture carbon dioxide for reuse or sequestration with a small amount of parasitic power loss. It has been suggested that a conventional amine separation system requires on the order of 40% of the power plant energy to capture carbon dioxide from a power plant flue gas. An exemplary system requires less than 20% parasitic power loss. In alternate embodiments, less than 10% and in some cases less than 5% parasitic power loss could be enabled with the described microchannel absorption system.

Other exemplary embodiments may perform 02 removal from a stream. For some systems, the removal of oxygen represents a system advantage to either remove a reaction species for purification of a product or to capture oxygen for use in other applications. Exemplary systems may incorporate a high degree of thermal integration as to reduce the parasitic power loss or reduce the specific power (kW-hr/ton 02) required to purify the oxygen.

In another exemplary embodiment, sulfur may be removed from a plant feed. Sulfur often represents an unwanted species that may foul a catalyst or contaminate a product stream or the exhaust stream vented to the environment. Capture of the sulfur species with a minimal requirement of additional energy may represent a system advantage.

In other exemplary embodiments, other gases, dilute or concentrated, may be removed from a solute-containing stream, where the purified stream is used for a downstream unit operation. For example, the purified stream may be used for a reaction, mixing, second separation process, heat exchange, and the like. Other exemplary embodiments may remove other gases, dilute or concentrated, from a solute-containing stream, where the purified stream is a final product that is packaged for market delivery.

Exemplary microchannel separation systems may provide unique advantages for biofuels to concentrate the reactants from a gasifier before entering a production reactor that may include a Fischer Tropsch or DME or methanol synthesis reactor, to remove or reduce the myriad of contaminants that may comprise a feed source, especially from municipal or other waste sources, and finally to concentrate the oxygen to enable a more efficient gasifier that does not operate directly on air but rather a more efficient source of pure or concentrated oxygen. For example, air separation for the gasifier feed may include high conversion of 02 (99+%) and enriched air (90+%) to reduce the amount of diluent (nitrogen) in the gasifier and thus the gasifier size and cost.

Exemplary embodiments may be used for gas cleanup, in which the absorption process may be used to remove H2S, NH3, CO2, N2, heavy tars, and other impurities, for example.

Exemplary embodiments may also be utilized to remove CO2 from the gaseous product of a Fischer Tropsch (FT) reactor. For a highly carbon and thermal efficient Fischer Tropsch system, the effluent from the outlet of a first stage FT reactor is supplied to a second stage FT reactor. Removal of the carbon dioxide and or methane from the first FT product stream concentrates the reactant stream for the inlet of the second FT reactor. A more concentrated reactant stream reduces the size and cost of the second stage of the FT reactor system.

For oxygen applications, high purity is desired for a number of applications, including merchant applications, chemical processing, medical, and welding among others. For these applications greater than 99% oxygen is sought and it is desired to have an efficient source of the oxygen and thus reduce the energy requirement to concentrate oxygen.

Enriched air, including enriched air at >90% purity, also represents applications for some chemical processing including oxidation reactions, medical, and combustion processes. Enriched air can improve the performance of furnaces used in many industries, including chemical, petroleum, and metal processing (e.g. steel processing). Applications include the combustion of a fuel comprising hydrogen, methane, and/or carbon monoxide to drive the endothermic methane steam reforming reaction. Enhanced air at 50% or greater oxygen also represents an opportunity for a thermally advantaged system especially for the fuel combustion that drives the endothermic methane steam reforming reaction. For these applications, the application system will not be advantaged if the energy requirement to purify the oxygen is high. For the described thermally advantaged oxygen capture systems, the specific power requirement to produce oxygen may be less than 1000 kW-hr/ton, less than 500 kW-hr/ton, or less than 250 kW-hr/ton. In one embodiment it may be less than 200 kW-hr/ton and in another between 50 and 250 kW-hr/ton.

Other exemplary applications for the Gas to Liquids processes includes the removal of nitrogen from the FT tail gas to reduce the diluent and in turn reduce the size and cost of the reactors. In addition the an exemplary system may be used to capture water from the combustion exhaust stream to reduce the requirement for fresh water in a gas to liquids or other application. Reduction of fresh water is of particular advantage for off-shore or remote processing environments. It may also be advantageous in a non-attainment area to reduce the need for fresh water or the rejection of process water into a local ecosystem.

For natural gas processing plants, the removal of acid gases including $CO_2$ and $H_2S$ in a thermally efficient manner may represent an advantage for the upgrading of natural gas including sour sources in an economic and efficient process.

Another application for an exemplary system is the purification of oxygen from air or production of air enriched with oxygen to drive an autothermal reformer to be used for hydrogen or syngas production, which may be used in a fuel processing, fuel cell, or a gas to liquids system. In an alternate embodiment, the purified air may be used in a partial oxidation system for converting a hydrocarbon, including methane, to synthesis gas or any hydrocarbon to a useful oxygenated hydrocarbon or an olefinic product.

Landfill gas is may also benefit from the removal of nitrogen and or acid gas and or other trace contaminants that will deleteriously impact the downstream processing catalysts required to upgrade the gas to either the purity of a natural gas pipeline or for the conversion to a liquid fuel.

Additional exemplary applications of enriched air include enhancement of bioreactors, including fermentation.

Gas Separations

The prior art discusses the use of ionic liquids for acid gas removal from light gases; separation of olefins from paraffins, dienes from olefins, and aromatics from olefins; removal of mercaptans from hydrocarbon streams. The prior art also teaches use of ionic liquids as an additive to improve distillation of close boiling compounds. However, the prior art does not teach selective absorption/desorption of compounds within a homologous series of hydrocarbons, e.g. C2 from C3, etc.

Differences in relative absorption capacities with respect to temperature or pressure may be used to enhance separation of natural gas liquids (NGL). The current practice for separating natural gas liquids in a gas processing plant involves distillation for purification of each of the desired products, e.g. ethane, propane, butane, pentane. Distillation operations have a large footprint, and consume energy which otherwise could have been recovered as a hydrocarbon product. A train of microchannel-based multiple absorption/desorption zones within one device or multiple devices may be used to provide multiple equilibrium stages for separation of NGL products based on relative absorption capacities. Microchannel-based heat exchangers can provide integrated recuperative heat exchange to recover energy used for desorption.

Pump Implant

A limitation with minimizing energy consumption for microchannel-based processes requiring pumping relates to the practical limitations of pumping efficiency of multiple streams at low flow rates vs. the pump efficiency of one stream at a high flow rate. Input of mechanical work, including pumping, is typically most efficient at higher flow rates to preserve an acceptable efficiency for work input. The result is that input of mechanical energy to a working fluid is usually supplied to a stream outside of a microchannel device; this approach requires manifolding between the macro and micro scales, resulting in excess dead volume for the fluid and, as well as loss in exergetic efficiency.

One way to counter this limitation is to design the microchannel apparatus to be built around the casing of a pump, wherein individual connecting channels or submanifolds are directed symmetrically into the suction side of a pump casing, and then discharged symmetrically on the discharge side of the pump casing. Alternatively, the pump casing may be built into the microchannel device to accomplish the same aforementioned goal.

An exemplary embodiment includes directing microchannels or submanifold channels in a radial or spherical direction in the suction (inlet) and/or discharge (outlet) entrances of the pump. The microchannels connecting to the pump cavity may need to be at a different angle or orientation than the microchannels used to conduct additional unit operations, such as mixing, heat exchange, chemical reaction, and chemical separation. The pump may be of the centrifugal type, using acceleration of fluid around a moving shaft. The pump may include a seal through which the moving shaft is connected to an exterior motor.

Emulsification and Crystallization using Ionic Liquids in Microchannels

Many compositions and properties are possible for ionic liquid solvents, which can be tailored using suitable design and chemical synthesis techniques. Micelles of materials can be formed within an ionic liquid solvent, and the size and morphology of the micelles can change with process conditions (e.g. temperature).

Microreactors can be used to precisely control temperature, residence time, and addition of components/reactants in order to form tailored micelles in an ionic liquid medium. Formation of the micelles may be used as a step in a crystallization process, wherein the solids are formed with controlled size and morphology. Once formed, the solids may be removed with a subsequent separation step. The ionic liquid is used in this case as a green solvent which assists the formation of the micelle.

Ionic Liquid in Thermal Compressor

The properties of ionic liquid can be tailored to provide thermal and transport properties as desired. This ability enables ionic liquids as a good candidate for absorbents in thermal compressors and in applications requiring thermal compressor such as vapor absorption refrigerators.

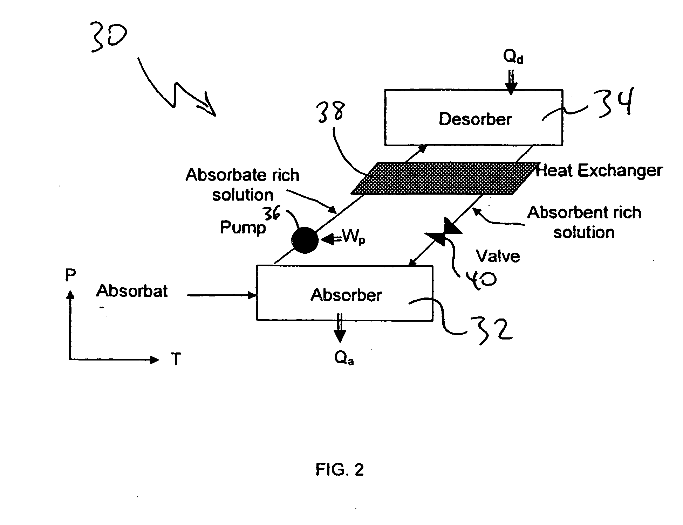

A schematic of an exemplary thermal compressor 30 is shown in FIG. 2. A thermal compressor is an example of utilizing waste heat (available at T>100°C) from another process to convert a low temperature/pressure fluid to high temperature/pressure fluid. The absorbate at low temperature and pressure is absorbed in the absorbent in the absorber 32. This process will require heat removal ($Q_a$) as the mixing process gives out heat of mixing. For some ionic liquids, the heat of absorption has been reported as endothermic and thus the temperature of the working solution or absorbent will decrease during absorption. The absorbate rich solution is then pumped to Desorber 34 which operates at higher pressure and temperature by utilizing waste heat ($Q_d$) from other processes. In desorber 34, the high temperature removes the absorbate from the mixture and the absorbate is now available at high pressure and temperature. The work input at pump 36 is small ($W_p$) while the absorbent rich solution is sent back to the absorber 32 through solution heat exchanger 38 and valve 40 (or a pressure reducing medium). The solution heat exchanger 38 exchanges heat between absorbate rich solution and absorbent rich solution to reduce heat duties of absorber 32 and desorber 34. The work input from the pump 36 ($W_p$) is generally small while heat input ($Q_d$) is available as waste heat source, so the thermal compressor 30 can operate at a low operating cost. The exemplary system is thermally integrated using microchannel heat exchangers 38 and/or absorption and desorption channels to reduce the system parasitic power loss.

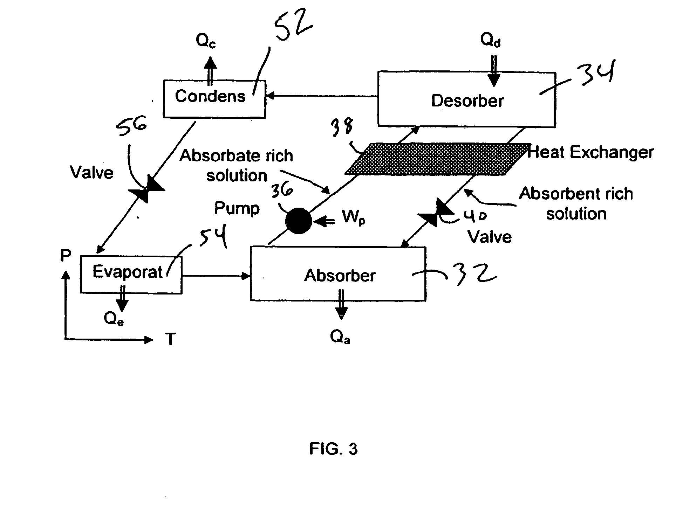

The high temperature and pressure absorbate can be used for absorption refrigeration cycle as shown in FIG. 3. In vapor absorption cycle, the absorbate is sent to condenser 52 where it condensers fully or partially and then send to evaporator 54 via a pressure reducing valve 56. The absorbate is either partially or fully condensed when it goes through the pressure reducing valve 56. The absorbate is heated up in evaporator 54 using the heat from the source that requires cooling. The generated vapor goes to the absorber thus completing the cycle.

The ability to manipulate ionic liquids properties provides several advantages for use in thermal compressor and its applications. Generally the ionic liquids have strong affinity for gases such as hydrocarbons allowing less absorbent required for the system. The ionic liquids are generally stable over a range of temperature which is also an important requirement for the absorbent in a thermal compressor. The high volatility ratio results in easier separation of absorbate and absorbent in the desorber 34 improving the overall efficiency of the cycle. In some embodiments, ionic liquids can also be used in a double effect absorption cycle.

In one exemplary embodiment components of thermal compressor and vapor absorption cycle (evaporator 54, absorber 32, desorber 34, condenser 52) are conventional devices. In another exemplary embodiment, components of thermal compressor and vapor absorption cycle (evaporator, absorber, desorber, condenser) are microchannel devices.

Microchannel Heat Exchanger to Recuperate Ionic Liquid Sorbent

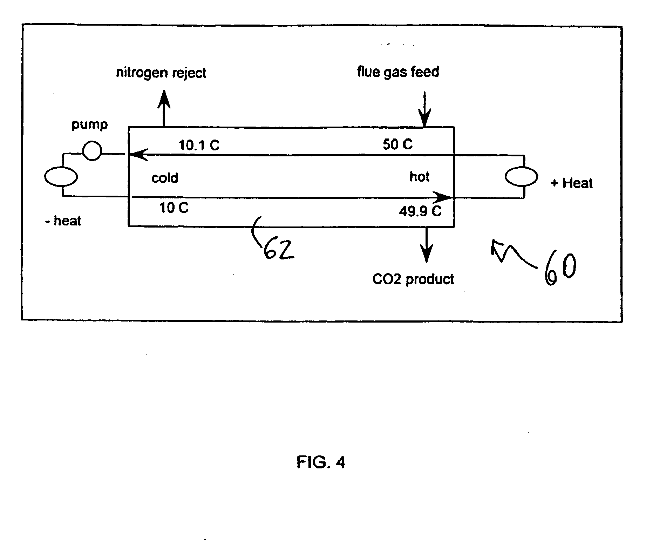

It may be advantageous to reduce the parasitic energy loss in the absorption/desorption process of, for example, methane into ionic liquid for separation in order to make the system operation economical. This means to reduce the energy input "-heat" or "+heat" in the exemplary system 60 shown in FIG. 4, which is equivalent to having a heat recuperation with very tight temperature approach at the hot and cold end.

An exemplary microchannel heat exchanger/recuperator is disclosed here in a design example of the following performance conditions:

Liquid flow rate: 54,000 Umin; closed loop system

CP = 1407 J/mol-K

density = 1.37 gm/cc

viscosity = 30 cP

$T_{max}$ = 50 C

$T_{low}$ = 10 C

Thermal conductivity= 0.19 W/m-K

Approach temperature target 0.1 to 0.25 K on each end.

Liquid volume 1000-10000 liter.

Material: stainless steel.

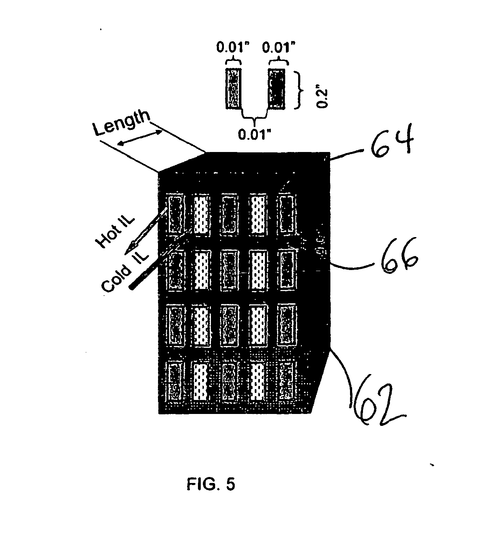

In an exemplary embodiment shown in FIG. 5, a counter-current flow arrangement is used in the device 62. The microchannel wall 64 is 0.01" thick that separates the hot and cold liquids, while the channel gap size 66 is also 0.01". For the above given flow rate at each side, a total length of 48" is necessary to achieve a 0.25 K approach temperature at the two ends for a goal of a temperature differential near 40 C between the hot and cold ends of the absorption and desorption system. For a system requiring a smaller temperature difference to achieve a desired system capacity for the absorbed solute, perhaps 20 C or 10 C or more or less difference between maximum and minimum temperature, then the advantaged process may have a shorter heat exchanger length less than 48" to achieve a very small (<1C) approach temperature.

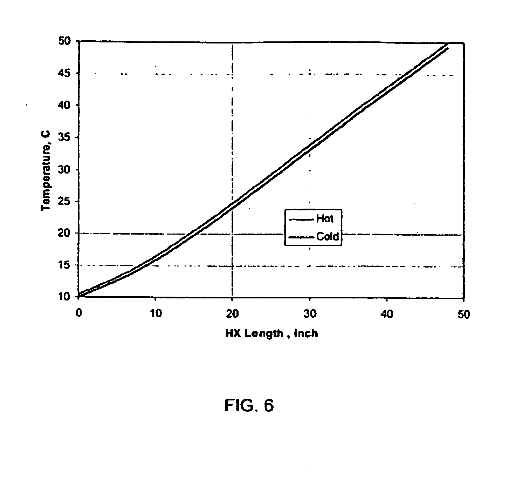

FIG. 6 shows a calculated temperature profile of the exemplary microchannel heat exchanger.

Table 1 provides exemplary parameters of the ionic liquid heat exchanger with 0.25 K approach temperature.

Table 1

| # of channel | 5000000 | |
|---|---|---|
| **Density** | 1370 | kg/m3 |
| **Total Flow Rate** | 50000 | L/min |
| | 4110000 | kg/h |
| **Flow rate /channel** | 0.01 | L/min |
| | 822 | g/h |
| **Dh** | 0.038095238 | in |
| | 0.000967619 | |
| **A** | 1.29032E-06 | m3 |
| **Re** | 5.707619881 | |
| **Channel volume** | *7.86579E-07* | *m3* |
| **Total liquid volume** | *3.933* | *m3* |
| **Metal volume/channel** | 9.439E-07 | *m3* |
| **(No perimeter)** | | |
| | 4.72 | *m3* |
| **Heat transferred/channel** | 12.57665 | Watts |
| **Total** | 62883250 | Watts |

The building material of the exemplary heat exchanger can be any chemically compatible metal or non- metal. As long as its thermal conductivity is in the range 0.1- 1000 W/m K, the change in the approach temperature is less than 1 degree Celsius. However, the liquid conductivity has a great effect. For a diluted ionic liquid, for example [bmim] [PF6] , at a conductivity 0.38 W/m K, the heat exchanger length can be shortened to less than 30" for the same approach temperature. Thus, for an optimization combining thermal and chemical processes, a diluted ionic liquid with higher thermal conductivity components is an option.

The Liquid Jet Enhanced Gas-Liquid Contact For Gas Absorption

For an efficient gas component separation via absorption in liquid sorbent, such as separation of CH4 from field gas using ionic liquid, good contact or mixing between the gas mixture (feed) and the liquid phase may be desired. However, because some liquid sorbents are highly viscous, such as the ionic liquid [bmim] [PF6] with a dynamic viscosity of 382 cP at room temperature, to break up liquid phase to have a larger- gas- liquid interfacial area is not straightforward in the absorption process. Thus, the mass transfer between gas and liquid is often limited by lack of good gas- liquid contact or mixing.

Surface tension that acts at the liquid surface tends to regularize the surface based on the facts that a gas-liquid interface possesses a specific energy and that liquid is deformable. A drop or a pocket of liquid takes the shape minimizing its surface area. On the other hand, there are some situations where a localized stress can deform a liquid surface in an extraordinary manner, which may be used in exemplary embodiments to enhance gas-liquid contact.

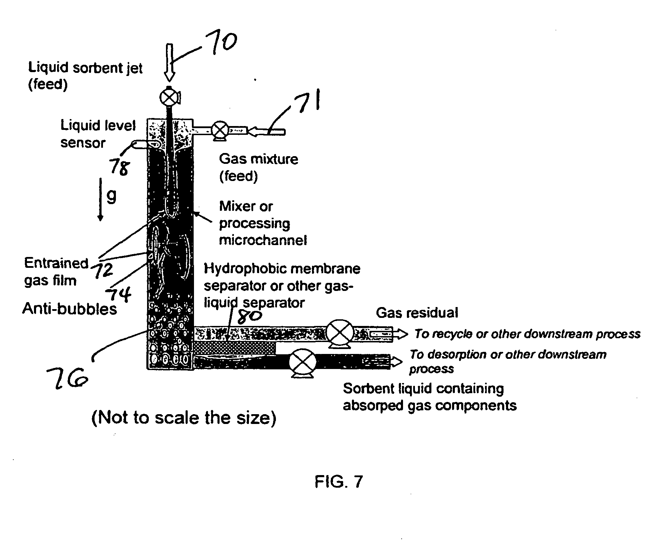

For example, and as shown in FIG. 7, when a highly viscous liquid 70 (10 - 1000000 cP) is jetted into the same or other also viscous liquid 71 at the gas-liquid interface at a high speed (1 mm/s to 100 m/s, for example), the gas is entrained between the two liquid parts (the jet and the bath) to form very thin gas film 72 in between. The thickness of the gas film 72 can be several microns. Some jetted liquid sheds away from the jet stream to form so-called "anti-bubble" 74which is a liquid droplet completely separated from the bulk liquid by thin gas film 72. However, these "anti-bubbles" are not stable generally. After their breakups, very small gas bubbles 76 are formed downstream of the process channel or the jet zone. In such away, the gas and the liquid get excellent contact via a temporally drastically increased interfacial area. Hence, mass transfer of the absorbate components and, in turn, the absorption process is enhanced. The existence of a gas-liquid surface at the jetting site may be important to entrain the gas; thus, the control of the liquid level in the mixer or the feed point may be needed. This can be realized by using a sensor 78, such as electric capacitance or impendence, laser or gamma ray detector, and a signal feedback controller of the pumps' flow rates of outflow liquid and gas residual. In the control logic, the jet flow rate and gas inlet flow rate may also be inputs to determine the liquid level inside the process channel/chamber space. To the downstream processes, the liquid and gas phases may need to be separated in a compact configuration, especially when the mixer or the process channel is in microchannel fashion. An in-line membrane gas-liquid separator 80 is also disclosed here. The membrane may be of a hydrophobic nature and may be implemented as part of the downstream channel wall.

Decomposition of methane hydrates

Scientists believe that there could be more valuable carbon fuel stored in the vast methane hydrate deposits scattered under the world's seabed, permafrost  and arctic ocean than in all of the known reserves of coal, oil and gas put together. Production of methane from hydrates has been made by depressurizing / gasification of the natural gas hydrate (NGH) layer plus the existing well-based technologies.

On the other hand, besides the current LNG-based energy supply system, NGH production and utilization systems are also believed to be a new high-efficient means to distribute and utilize energy, especially for small to mid-size markets and small-scale gas suppliers. The known aspects involved in the NGH technology development include: multi-component mixed gas hydrate processing technologies, technologies to remove the heat from NGH formation by utilizing untapped cold energy, technologies to enable continuous cooling and depressurizing NGH, technologies and systems to deliver and use NGH.

From the above two scenarios, a discharge, gasification or depressurize step is required in the NGH production and utilization. Here, depressurization / gasification is also referred to decomposition.

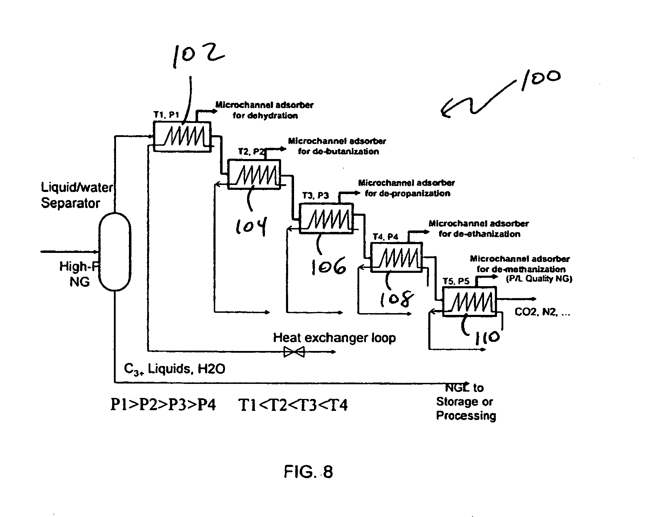

An exemplary controlled NGH decomposition process combined with adsorption function/process (via liquid or solid sorbent) using microchannel technology is disclosed. The exemplary process is multi-staged. The system 100 includes microchannel adsorption separators 102, 104, 106, 108, 110 named "microchannel adsorbers" in FIG. 8. In each microchannel adsorber 102, 104, 106, 108, different sorbents, including ionic liquids, may be used to achieve maximum removal of the targeted component by making use of the corresponding pressure excursion segment in the overall NGH decomposition process. Valves and other components known to those of skill in the art are not included in FIG. 8 for clarity.

Exploiting surface tension effects for separations in microchannel systems

Inlet effect and a micro-bubble mixer

One of the directly useful surface tension effects in microchannel separation systems is the history effect of two-phase flow pattern, i.e. the flow or mixing pattern in the inlet of the microchannel process remains for a distance downstream. The reason is that the fluids flow downstream in the time needed to correct the gas-liquid interface shape. This effect fades in the flow direction after a distance. However, a certain distance with a forced flow pattern may be important for mixing and, in turn, in the overall adsorption reaction efficiency between the  phases, because the processing microchannel is usually short due to its capacity. As such, the design of an inlet or mixer may be important.

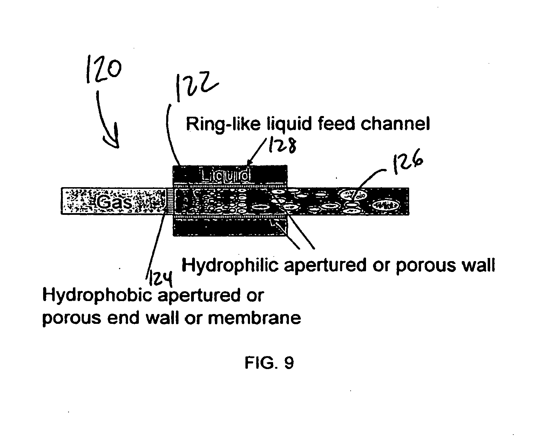

An exemplary embodiment inlet 120 shown in FIG. 9 may generate "micro bubbles" 122 as the form of the gas feed using a hydrophobic membrane or sieve 124 at the process microchannel inlet. The opening of the membrane or other apertured wall ranges from 1 micrometer to 100 micrometer, for example. The microbubbles may coalescence into larger bubbles or slugs 126, but this may occur in the exit. To ensure a uniform phase distribution, the liquid is introduced from the periphery of the channel - an apertured wall. The feed channel 128 may be "ring-like," meaning annular or rectangular cross section depending on cross section shape of process channel, for example.

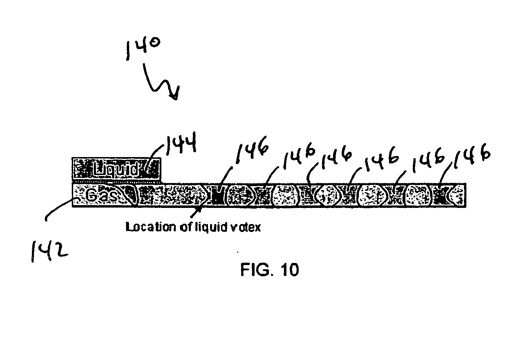

An exemplary slug type mixer 140 is shown in FIG. 10. It may be used in a microchannel adsorption process using liquid sorbent, when the microchannels gap is small (< 1.5 mm). By adjusting the pressure in the gas 142 and liquid 144 feeds, the short liquid slugs 146 can be formed. The contact surface area in the phase interface can be maximized by an optimal slug 146 length. Actually, there will be liquid film underneath the gas slug. And vortices in the tail tips of each liquid slug significantly enhance the mass transfer and in turn the adsorption process.

Mimimizing Liquid in Macromanifold

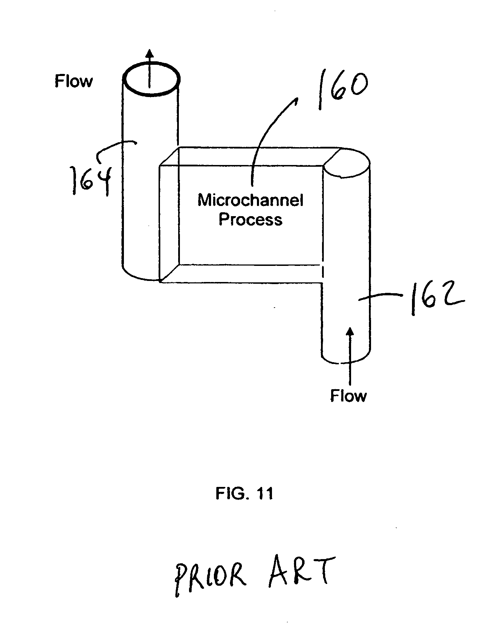

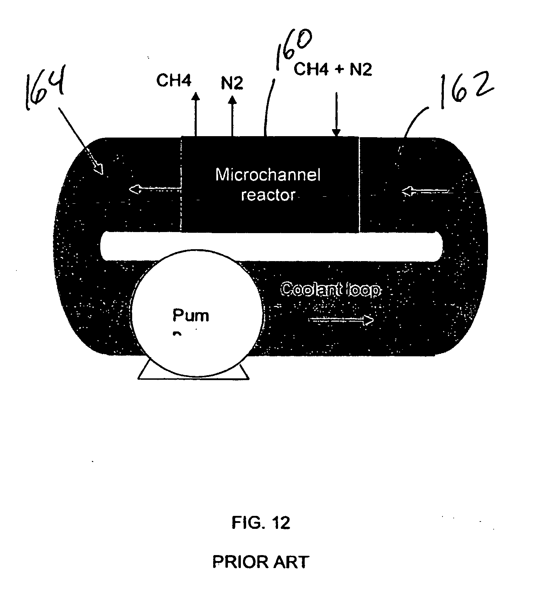

For a typical application, a macromanifold design may have a small pressure drop and may be able to distribute flow uniformly among the microchannel openings. Also, a macromanifold for a microchannel reactor device may be designed such that the entire flow rate of the fluid (whether the fluid is a reactant or a heat exchanger fluid) through the reactor can be flowed through the macromanifold. These requirements generally result in use of large size pipes (>1" diameter) as a macromanifold. FIGS. 11 and 12 show a typical microchannel reactor 160 with macromanifold arrangement, including inlet macromanifold 162 and outlet macromanifold 164.

For applications which involve a high cost thermal fluid medium, volume in the macromanifold adds additional cost with no returns since the fluid in the macromanifold does not contribute directly to the productivity. Hence there is always an effort to reduce the total volume of the macromanifold to minimize the total quantity of expensive fluids needed.

For a cylindrical geometry of macromanifold, the volume of manifold is proportional to square of the diameter. If the diameter is reduced by half, the volume of the macromanifold is reduced by 4 times.

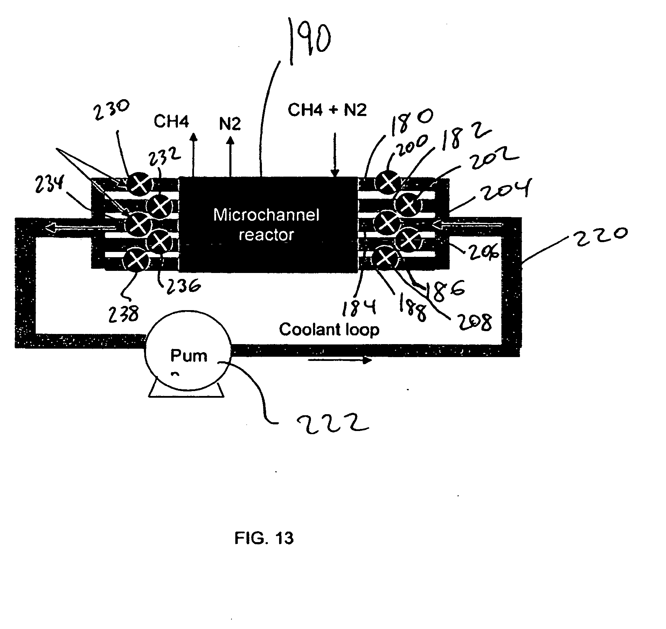

For applications like thermal swing absorption, where the temperature of the process channel needs to be cycled between two temperatures and uses a high cost coolant fluid such as ionic liquids, an exemplary approach shown in FIG. 13 may be adopted to minimize the macromanifold size and fluid volume in the macromanifold. The conventional manifold approach (heat exchangers and other equipments excluded) for the coolant loop is shown in FIG. 11 and 12. The macromanifolds 162, 164 cover the entire faces of the microchannel reactor 160 and the total fluid volume needed in the reactor is circulated through the coolant loop.

In thermal swing absorption cycle, the thermal fluid medium is used to heat and cool the bed. The thermal fluid medium fills the respective channel and stays there to heat or cool the process bed. After the required temperature is achieved, the thermal fluid medium is removed from the channel and the process channel fluid is changed for the next cycle.

FIG. 13 shows a macromanifold approach with smaller volume that can be employed for such process. Instead of one macromanifold, several macromanifolds 180, 182, 184, 186, 188 are connected to the outlet or inlet face of the microchannel reactor 190 that covers different sections of the reactor 190. Each macromanifold 180, 182, 184, 186, 188 has a flow controlling valve 200, 202, 204, 206, 208. All the macromanifolds 180, 182, 184, 186, 188 are then connected to a single pipe 220 which is connected to the pump 222. (Other components such as the heat exchanger, etc. are not shown in FIG. 13.) The valves at the inlet and outlet 230, 232, 234, 236, 238 operate in a cyclical manner. At any time, one or more valves at the inlet and outlet may be closed.

During operation, the thermal fluid medium enters the section of the reactor 190 through macromanifolds 180, 182, 184, 186, 188 with open valves 200, 202, 204, 206, 208 and heats or cools the process wall. While this section of the reactor 190 is heating or cooling, the section of the reactor 190 which already has already reached the required temperature, its outlet valve 230, 232, 234, 236, 238 opens and removes the fluid medium. Once the temperature of the first section reaches the required temperature, its exit valve 230, 232, 234, 236, 238 opens to remove the fluid and the cycle continues. The opening and closing of the valves may be electronically controlled.

At any given time only few exit and inlet valves may be open, so the size of the pipe needed and hence the volume of the fluid needed may be reduced.

Exemplary embodiments may use the momentum of the gas phase coming in to create the momentum in the fluid required to circulate the IL fluid. Embodiments may use gravity (by slanting the device, for example) so the entraining gas pushes the liquid to the high end and gravity helps get it back. In an embodiment, gas may be jetted in the bottom with such a force that it shoves the IL to the top of the circuit and the IL simply falls back on the return.

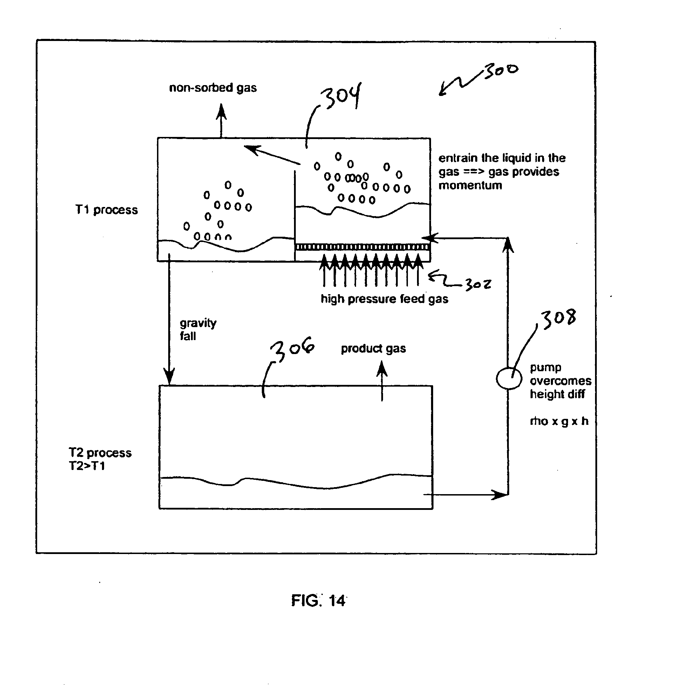

FIG. 14 depicts and exemplary absorption and desorption system 300 where the feed gas 302 is pressurized and provides the momentum to move the absorbent through the absorbent unit 304 operation (whose contact may be effectuated by any of the above aforementioned concepts) and gravity drops the absorbent to the second stage desorption unit 306. At the end of desorption stage a small pump 308 must be provided to raise the absorbent from the lower desorbing 306 unit to the higher absorbing 304 unit to complete the cycle.

In exemplary embodiments, hardware may be fabricated from plastic to help reduce axial conduction and/or alternatively take advantage of hydrophilic/hydrophobic characteristic of the surface to enhance the surface wetting and reduce drag. In an exemplary embodiment, the heat transfer coefficient of the fluid is sufficiently high that the larger resistance to heat transfer is through the intervening wall separating the hot and cold sides of the absorption process. For this case a higher thermal conductivity material such as a metal including nickel, iron, aluminum, copper or other may be utilized with further the optional inclusion of thermal breaks in the axial direction of heat flow.

An exemplary contacting method for absorption of SO2 from flue gas may include a falling film configuration and/or a co- currently flowing system (simultaneously uptaking CO2, as well) . [hmim] [Tf2N] , 1- n- hexyl- 3- methylimidazolium bis- (trifluoromethylsulfonyl) imide, may be used as the absorbent. Approximately 1mol of SO2 can be absorbed by 1 mol of this ionic liquid. Hence, if absorption of all the SO2 from a flue gas stream flowing at 7500 metric tons/day, with a concentration of 0.2% SO2, 20% CO2, the remainder N2, is required, only approximately 7.7 LPM of ionic liquid are required. Although a relatively small falling film system would be required to allow such flow (with a liquid thickness of 0.040" and a 7ft wide wall (calculated assuming a maximum Reynolds number of 4 to avoid liquid surface rippling, using the derivations in Transport Phenomena, of Bird. B., Stewart, W.E., and Lightfoot, E.N., 1960, pp. 35- 41) , such a system would not allow the interfacial surface and contact time required to achieve the required mass transfer. Hence, in this particular scenario, the tight contacting allowed in a co- current microchannel flow would be significantly more advantageous.

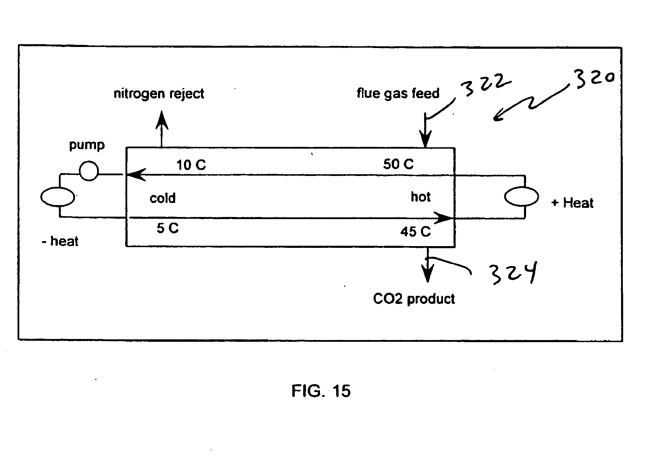

An exemplary separation system 320 to minimize power consumption for the purification of carbon dioxide 324 from a flue gas mixture 322 comprising same is shown in FIG. 15. For the amount of methane absorbed into the ionic liquid BmimPF6 as cited in "Solubilities and Thermodynamic Properties of Gases in the Ionic Liquid 1- n- Butyl- 3- methylimidazolium Hexafluorophosphate", Anthony, J., Maginn, E., and Brennecke, J., J. Phys. Chem B 2002, 106, 7315- 7320, an exemplary system operates as follows. The Henry's law constant for carbon dioxide at 10 C of roughly 40 bar is used along with the maximum Henry's law constant for nitrogen of 20, 000 bar. Using an inlet system pressure of 1.1 bar and a feed gas mixture comprising 13% carbon dioxide, the liquid mole fraction of carbon dioxide at phase equilibrium is 0.024.

For a system with a total flue gas flow rate of 2 billion gms per day which roughly corresponds to a 12 MW power plant and the 13% feed carbon dioxide composition, then the required flow rate of the ionic liquid to recover 90% of the carbon dioxide in the flue gas is roughly 54,000 Umin at equilibrium. The reported molecular weight of this ionic liquid is 284 gm/mole. The reported density is roughly 1.37 gm/cc. The volumetric ratio of liquid to gas is roughly 0.05 at the feed inlet. For alternative ionic liquids with more capacity for carbon dioxide, then the amount of ionic liquid required would reduce roughly proportionally with the reduction in Henry's law constant.

From the reported maximum Henry's law constant for nitrogen, the minimum purity possible in a single stage may be 98.7%. If the actual Henry's law constant is lower than the maximum reported value, then the purity for carbon dioxide in a single stage may be higher than 98.7%.

$$Purity= (yCO2/HCO2)/(yCO2/HCO2 + yN2/HN2)$$

where y is the partial pressure of the constituent and H is the Henry's law constant.

For a thermal swing process, energy must be added to the gas-fluid mixture to desorb the carbon dioxide and removed from the fluid to absorb the carbon dioxide. Using an average heat capacity as reported in the literature of 400 J/mol-K and the reported liquid flow rates then the amount of energy added will be a function of the degree of thermal recuperation. Table 2 includes the parasitic thermal energy required to drive the absorption and desorption unit operations as a function of the heat exchange approach temperature.

Table 2

| dT in C (approach at each end) | Q-heat (MW) | Q-cool (MW) | Q total (MW) |
|---|---|---|---|
| 10 | 17.3 | 17.3 | 34.6 |
| 5 | 8.7 | 8.7 | 17.4 |
| 2 | 3.7 | 3.7 | 7.4 |
| 1 | 1.7 | 1.7 | 3.4 |
| 0.5 | 0.87 | 0.87 | 1.74 |
| 0.1 | 0.17 | 0.17 | 0.35 |

As shown in Table 2, as the approach temperature is improved at each end of the unit, the total amount of energy required to drive the system is reduced. An exemplary process is operated with approach temperatures less than 10 C to remove the heat, or add the heat to the ionic liquid, or both. Another exemplary process may have approach temperatures less than 5C. Another exemplary process may have approach temperatures below 2C and in some embodiments less than 0.5 C. In one case, the approach temperature at one or both ends may range from 0.05 C to 0.5 C.

As seen in Table 2, for an approach temperature of 0.5 C the thermal parasitic power loss is roughly 15%. As the approach temperature is dropped below 0.3 C, the parasitic thermal power loss drops below 10% of the power plant energy requirement. For an exemplary system with an approach temperature of 0.1 C, then the parasitic power loss is less than 3%.

The absorption process for carbon dioxide releases heat, roughly 16 kJ/mol of carbon dioxide for the exemplary ionic liquid. For this separation and the moles of carbon dioxide absorbed, roughly 1.61 MW of energy will be released during absorption. Using the heat capacity of the ionic liquid, this roughly equates to less than a 0.14 C temperature rise in the fluid.

In another exemplary embodiment reducing the energy consumption when taking into account the heat of absorption, an ionic liquid with a higher capacity may be used. Alternatively, heat rejection to ambient for part of the cycle may be used to avoid the need for energy consumption from a chiller or other cooling source.

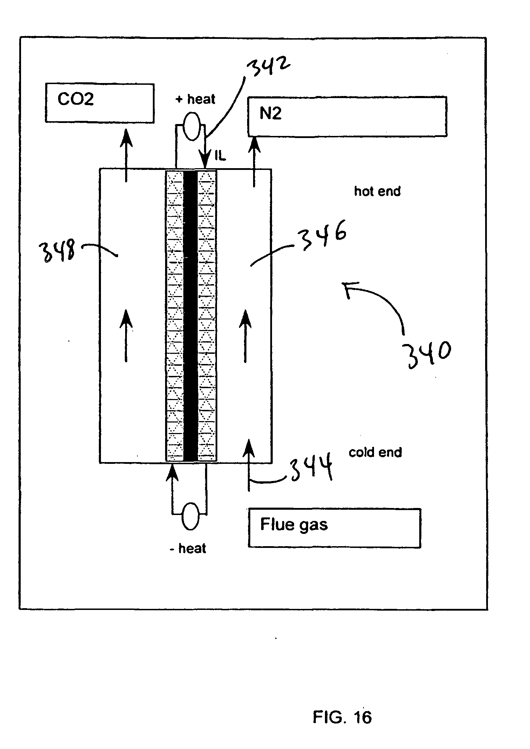

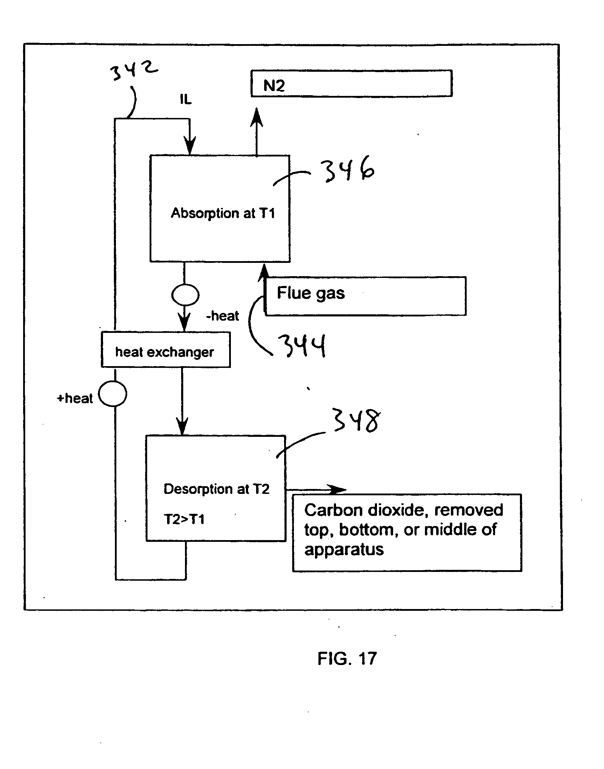

In an alternative exemplary embodiment, a multi-stage absorption system 340 includes counterflow of an ionic liquid 342 and the feed gas 344 enables the use of a reduced volume of the ionic liquid absorbent. The heat is recuperated between hot and cold devices or ends of a device as shown in FIG. 16. The recuperation of heat reduces the amount of parasitic energy loss for an advantaged system. The further advantage of the counterflow absorption system is the enablement of multiple stages for separation which reduces the inventory required of the ionic liquid. This approach may include contacting of the two phases in a counterflow mode. The absorber 346 and desorber 348 unit may be separate unit operations as shown in FIG. 17 or integrated in a single unit operation or block as shown in FIG. 16.

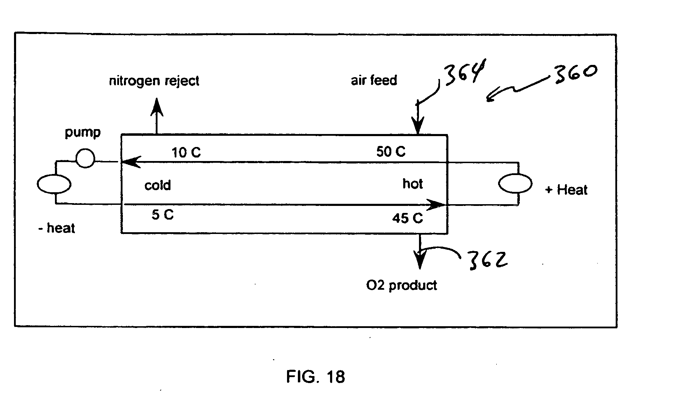

An exemplary separation system 360 to minimize power consumption for the purification of oxygen 362 from air 364 is shown in FIG. 18. The reported Henry's law constant for oxygen at 50 C of roughly 1550 bar is used along with the maximum Henry's law constant for nitrogen of 20,000 bar. Using an inlet system pressure of 2 bar and a feed gas mixture comprising 21% oxygen (essentially air), the liquid mole fraction of oxygen at phase equilibrium is 0.0035 assuming that roughly 50% of oxygen is captured.

For a system with a total air flow rate of 1000 standard cubic feet per day as a basis, then the required flow rate of the BmimPF6 ionic liquid discussed from the literature cited parameters to recover 50% of the oxygen from the air gas is roughly 5.5 Umin at equilibrium. For this equilibrium case roughly 2.1 Umin of oxygen is captured in the ionic liquid. The reported molecular weight of this ionic liquid is 284 gm/mole. The reported density is roughly 1.37 gm/cc. The volumetric ratio of liquid to gas is roughly 0.28 at the feed inlet. For alternative ionic liquids with more capacity for oxygen over that reported in this example, then the amount of ionic liquid required would reduce roughly proportionally with the reduction in Henry's law constant.

From the reported maximum Henry's law constant for nitrogen, the minimum purity possible in a single stage may be 77.1%. If the actual Henry's law constant is lower than the maximum reported value, then the purity for carbon dioxide in a single stage may be higher than 77%. The nitrogen Henry's law constant is reported at non-detect or a minimum value of 20,000 bar. If the actual constant were 40,000 bar, then for the same case a single stage purity would exceed 87%. If the constant were greater than 80,000 then the purity for a single stage pass would exceed 93%. For a purity of 99% oxygen, the actual Henry's law constant for nitrogen would need to be greater than 580,000 bar.

$$Purity = (yO2/HO2)/(yO2/HO2 + yN2/HN2)$$

where y is the partial pressure of the constituent and H is the Henry's law constant.

For a thermal swing process, energy must be added to the gas-fluid mixture to desorb the carbon dioxide and removed from the fluid to absorb the oxygen. Using an average heat capacity as reported in the literature of 400 J/mol-K and the reported liquid flow rates then the amount of energy added will be a function of the degree of thermal recuperation. Table 3 lists the parasitic thermal energy required to drive the absorption and desorption unit operations as a function of the heat exchange approach temperature based on an improved ionic liquid with a 3 times reduction in Henry's law constant over that reported for oxygen at 50 C in BmimPF6.

Table 3

| dT in C (approach at each end) | Q-heat (kW) | Q-cool (kW) | Q total (KW) | Specific energy (kW-hr/ton O2) |
|---|---|---|---|---|
| 10 | 1.7 | 1.7 | 3.4 | 18120 |
| 5 | 0.88 | 0.88 | 1.76 | 9061 |
| 2 | 0.35 | 0.35 | 0.7 | 3624 |
| 1 | 0.18 | 0.18 | 0.36 | 1812 |
| 0.5 | 0.09 | 0.09 | 0.18 | 906 |

(continued)

| dT in C (approach at each end) | Q-heat (kW) | Q-cool (kW) | Q total (KW) | Specific energy (kW-hr/ton O2) |
|---|---|---|---|---|
| 0.1 | 0.02 | 0.018 | 0.04 | 181 |

As shown in Table 3, as the approach temperature is improved at each end of the unit, the total amount of energy required to drive the system is reduced. An exemplary process is operated with approach temperatures less than 10 C to remove the heat, or add the heat to the ionic liquid, or both. Another exemplary process will have approach temperatures less than 5C. Another exemplary process may have approach temperatures below 2C and in some embodiments less than 0.5 C. In one case, the approach temperature at one or both ends may range from 0.05 C to 0.5 C.

The specific power for oxygen separation using cryogenic separation has been reported as roughly 224 kW-hr/ton. Other sources have noted the specific power requirement for oxygen separation to be comparable and on the order of 250 kW-hr/ton of 02 produced. The numbers cited in the table do not include pumping power but may be offset by the rejection of heat to the atmosphere rather than using a cooling duty. It appears that with an improvement in the Henry's law over that reported for BmimPF6 by a factor of 2 to 5 coupled with a highly efficient thermal process to recuperate heat from absorption and desorption then the specific power to produce oxygen may be less than 1000 kW-hr/ton, less than 500 kW-hr/ton, and less than 250 kW-hr/ton. In one embodiment it may be less than 200 kW-hr/ton and in another between 50 and 250 kW-hr/ton.

The absorption process for oxygen requires heat, roughly 51 kJ/mol of oxygen for the cited ionic liquid. For this separation and the moles of oxygen absorbed roughly 150 W of energy will be consumed during absorption. Using the heat capacity of the ionic liquid, this roughly equates to a 1 C temperature decrease in the fluid. This reported endothermic nature of the absorption of oxygen into the ionic liquid is a further advantage that reduces the cooling duty applied to the ionic liquid and only requires the addition of a small heat source. With the appropriate design of the recuperative heat exchanger, the specific energy required for the thermal process could be reduced in roughly half over that reported in Table 3.

In an alternative exemplary embodiment, a pressure swing process for the separation of oxygen from air uses an ionic liquid or other absorbent. The gas is compressed from 1 bar to 2 bar or more to assist with the absorption of oxygen into the ionic liquid. In some exemplary embodiments, the air is compressed to 5 bar or more to remove oxygen at or above atmospheric pressure to eliminate the need for vacuum desorption process equipment. The compression power is provided at roughly 75% efficiency. The rejected nitrogen will be at a partial pressure of roughly 0.79 times the compressed power in the limiting case of complete oxygen absorption. This pressurized nitrogen stream may be expanded to recover energy to drive the compressor. The expander may be on the order of 60% efficient. The net impact for the system of an integrated compressor and expander is a reduction of more than 30% of the original compressor energy to pressurize the air.

In an exemplary embodiment, maximizing interfacial area may improve effective mass transfer across phases. The use of ionic liquids for preferential absorption of species from a vapor stream is exemplary of the type of process that can benefit from enhancements obtainable by processing on the micro-scale. Because species diffusivity through the liquid phase is relatively low, reduced diffusion thicknesses can have a significant impact on process effectiveness.

In an exemplary process involving absorption of a 1000 sccm pure methane vapor stream into a [hmim] [FAP] ionic liquid stream with a Henry's constant of 230 bar/ mole fraction, one can expect to be able to absorb 100% of the methane (at room temperature and under a driving force of 10 atm) by flowing the liquid (with a density of 1.56 g/cc) at a flow rate of 268 ccm. For a given set of feed stream compositions, counter-current operation leads to increased driving force for mass transfer, but counter-current flooding limits reduce the window of operation and make processing in co-current mode more flexible and practical.

A rough estimate of co-current and counter-current performance can be made by disregarding the reduction in vapor flow with absorption, assuming liquid-side dominated mass transfer, an overall mass transfer coefficient, $K_L a$, and a pressure drop that are not impacted by flow direction, and the following expression for the rate of species absorption, $r_i$,

$$r_i = K_L a \left( C_i^{\bullet} - C_i \right)_{\log \ mean}$$

where $C_i^{\bullet}$ and $C_i$ are the absorbed species concentrations at the liquid interface and in the bulk, respectively. The log mean values relate to the differences at the liquid inlet and outlet ports.

For a 10 atm driving force, a 0.7 atm pressure drop along the liquid flow direction, a 0.8 absorption efficiency (ratio of the absorbed species concentration in the liquid at the exit port to the maximum achievable absorbed species concentration in the liquid), counter-current operation leads to twice the driving force of co-current operation. The less than order of magnitude enhancement and the decreased capacity of counter-current operation may warrant the adoption of co-current flow in some embodiments.

A significant reduction in pressure drop can be had relative to processing through packed beds by using a foam. Because of their relatively high pure fluid viscosity, ionic liquid processing stands to gain from the use of such high porosity, microscale structures that help maximize interaction while minimizing pressure drop and pumping power needs.

In conjunction with ionic liquids, the solid foam approach may be used for carbon sequestration. Some exemplary embodiments allow variable foam stacking lengths, ensuring direct contacting of the cut foams. Because appropriate distribution and interaction of the phases throughout the flow path may be contingent on appropriate feed configurations, vapor and liquid entrance ports may be incorporated to bring the independent streams in direct contact with the beginning of the foam stack. Cylindrical and rectangular process channel configurations allow the use of diverse foam cross sections, to accommodate different foam cutting needs and pore densities. Liquid and vapor feed streams may alternate or intertwine to aid distribution across the whole cross section. Stacks of foams of different porosities, materials, and structures can be incorporated in the same device to provide varying processing effects. Readily available foams include aluminum, carbon, copper, nickel, stainless steel, silicon carbide, among others. Good wetting of the foam by the liquid stream is important to effective performance. In the case of absorption, the foam may be inert, serving only to facilitate flow and phase distribution. If the devices are to accommodate heterogeneous reactions, foam functionalization can allow for relatively easy catalyst integration and regeneration or replacement.

In an exemplary embodiment, the foams are activated with a catalyst or other agent that acts upon the solultes sorbed in the liquid wetted to the activated foam structure. This embodiment would allow more time for a reactive solute to interact with the liquid and activated foam or continuous and porous solid than would be enabled if the solute remained in the gaseous phase. The gaseous phase typically has a shorter residence time in the reaction media. In this embodiment, one or more solutes is preferentially sorbed in a liquid over one or more alternate solutes that are not sorbed or much less strongly sorbed in the liquid sorbent phase.

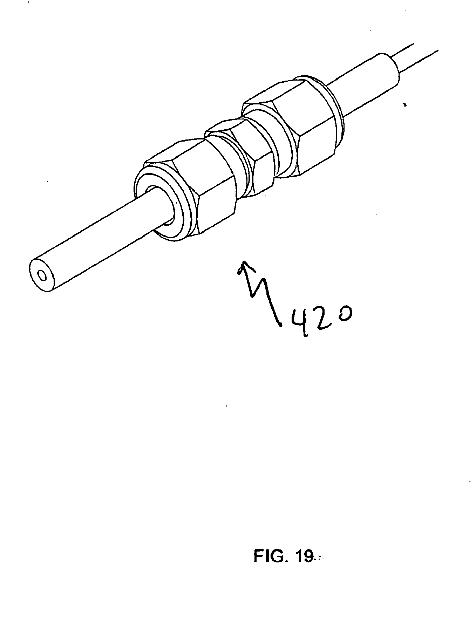

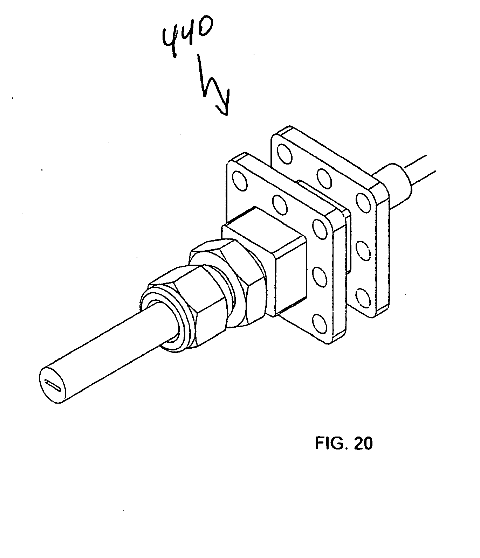

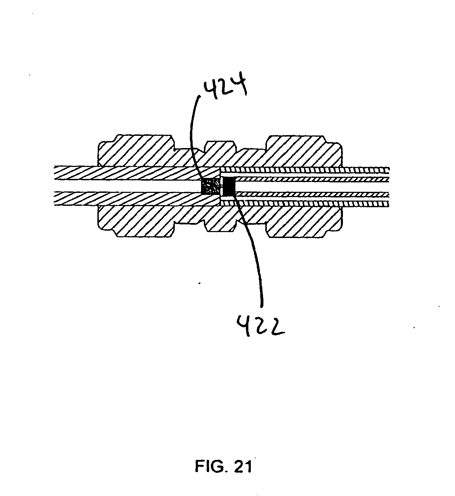

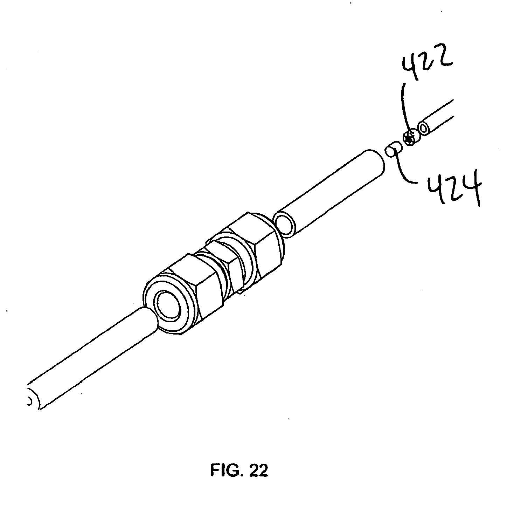

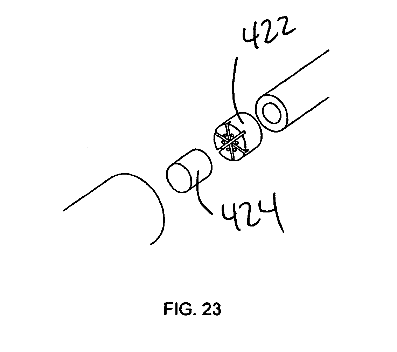

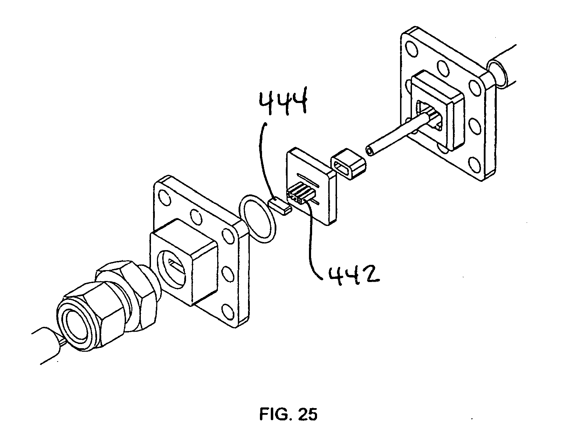

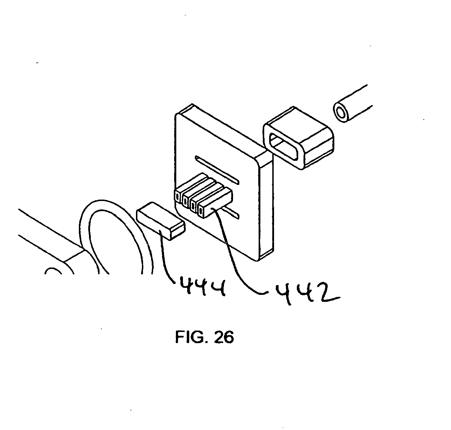

Two exemplary device configurations, incorporating cylindrical 420 and rectangular 440 flow cross-sections, are shown in FIGS. 19 and 20 and in greater detail in FIGS. 21-26. The depicted exemplary configurations accommodate co-current flows and reflect relatively short foam stacking lengths.

As shown in FIGS. 21-23, a multiphase manifold 422 may be attached upstream of the foam 424 to spread the liquid across the face of the foam 424 and concurrently touch the foam 424 to prevent a head space where two phases may recombine upstream of the foam. This multiphase manifold 422 may improve the uniformity of wetting and distribution of liquid across the surface of the foam 424.

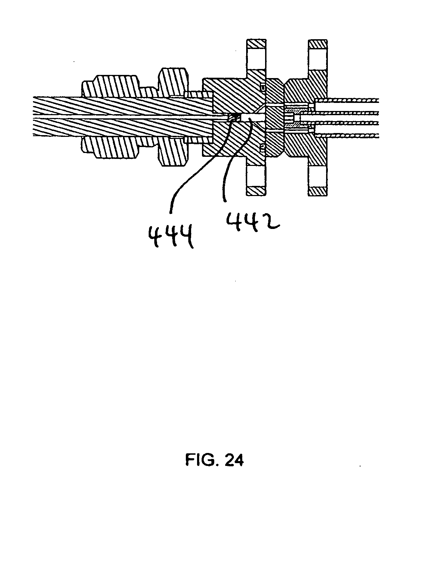

In the multiphase manifold 442 as shown in FIGS. 24-26 the above figure, the gas and liquid fluids are kept separated until they contact the foam 444 or  connected porous media substrate. This substantially prevents the two phases from mixing prior to flowing into the connected porous media or foam 144.

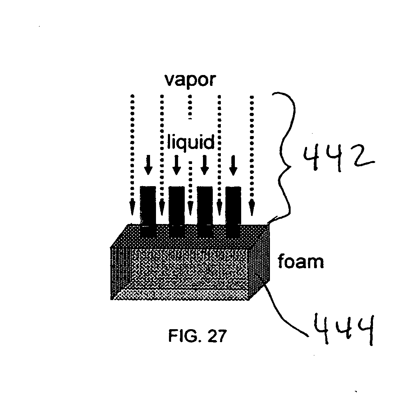

FIG. 27 depicts an example of the multiphase manifold 442 where the liquid inlet is substantially in contact with the foam 444 or the continuous connected porous media.

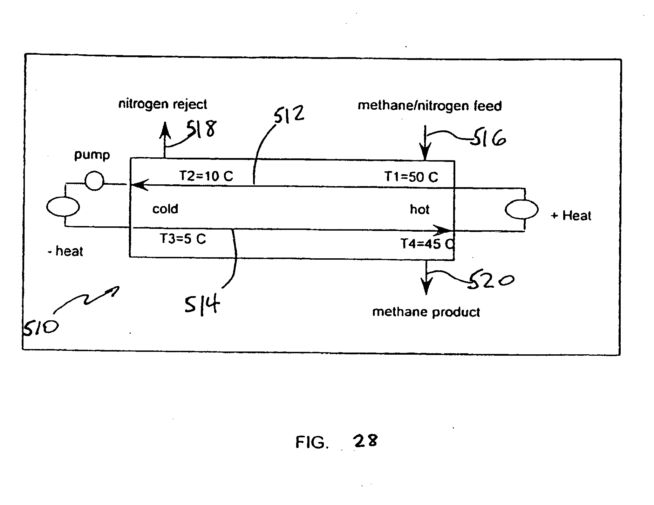

Exemplary systems may be adapted to minimize power consumption for the purification of methane in a fluid comprising methane and nitrogen. For example, FIG. 28 depicts a thermally integrated system 510 for recuperating energy to an absorption-desorption cycle using ionic liquids. As shown, the approach temperatures are 5 C at each end of the unit and a larger 40 C driving force is applied to assist with increasing the capacity difference for methane.

The Henry's law constant for methane at 10 C of 1480 bar is used along with the minimum Henry's law constant for nitrogen of 20,000 bar. Using an exemplary inlet system pressure of 10 bar and a feed gas mixture comprising 80% methane, the liquid mole fraction of methane is 0.016.

For an exemplary system with a total feed flow rate of 2,000,000 standard cubic feed per day and the 80% feed methane composition, then the required flow rate of the ionic liquid discussed is roughly 54,000 Umin at equilibrium to recover roughly 63% of the methane. The reported molecular weight of this ionic liquid is 284 gm/mole. The reported density is roughly 1.37 gm/cc. The volumetric ratio of liquid to gas is roughly 1.4 at the feed inlet. The ratio increases to roughly 7 as the bulk of the methane is absorbed into the ionic liquid. For alternative ionic liquids with more capacity for methane over that reported in this example, then the amount of ionic liquid required would reduce roughly proportionally with the reduction in Henry's law constant.

From the reported maximum Henry's law constant for nitrogen, the minimum purity possible in an exemplary single stage is 98.2%. If the actual Henry's law constant is lower than the maximum reported value, then the purity for methane in a single stage may be higher than 98.2%

Purity= (ymethane/ Hmethane) / (ymethane/ Hmethane + yN2/HN2) where y is the feed mole fraction and H is the Henry's law constant. Purity is defined exclusive of the absorbent.

For an exemplary thermal swing process, energy must be added to the gas-fluid mixture to desorb the methane and removed from the fluid to absorb the methane. Using an average heat capacity as reported in the literature of 400 J/mol-K and the reported liquid flow rates, then the amount of energy added will be a function of the degree of thermal recuperation.

Table 4 shows energy required as a function of approach temperature to capture 63% of a mixture comprising 80% nitrogen and flowing at 2 million standard cubic feet per day using the BmimPF6 ionic liquid.

Table 4

| dT in C (approach at each end) | Q-heat (MW) | Q-cool (MW) | Q total (MW) |
|---|---|---|---|
| 10 | 17.3 | 17.3 | 34.6 |
| 5 | 8.7 | 8.7 | 17.4 |
| 2 | 3.7 | 3.7 | 7.4 |
| 1 | 1.7 | 1.7 | 3.4 |
| 0.5 | 0.87 | 0.87 | 1.74 |
| 0.1 | 0.17 | 0.17 | 0.35 |

As shown in Table 4, as the approach temperature is improved at each end of the unit, the total amount of energy required to drive the system is reduced. An exemplary process may be operated with approach temperatures less than 10 C to remove the heat, or add the heat to the ionic liquid, or both. Another exemplary process may have approach temperatures less than 5C. Yet another exemplary process may have approach temperatures below 2C and in some embodiments less than 0.5 C. In an exemplary embodiment, the approach temperature at one or both ends may range from 0.05 C to 0.5 C.

The absorption process requires heat for methane in the bmimPF6 ionic liquid as cited, roughly 2kJ/mol of methane for the cited ionic liquid. For this separation and the moles of methane absorbed, roughly 47 kW of energy will be required during absorption. Using the heat capacity of the ionic liquid, this roughly equates to less than a 0.03 C temperature loss in the fluid, but this is advantageous as the bulk temperature of this fluid stream is decreasing in the absorption section of the process system. This small increase will result in a slight increase in the log mean temperature difference for the heat exchanger and result in a slightly smaller requirement for surface area which is typically advantageous.

For the example above, the calculated methane recovery is roughly 63%. If higher methane recovery is sought, then more ionic liquid is required in a one-stage process.

Table 5 shows the relationship between methane recovery and flow rate of BmimPF6 ionic liquid absorbent.

Table 5

| Methane recovery % | IL flow rate (L/min) |
|---|---|
| 63 | 54550 |
| 70 | 68350 |
| 80 | 95530 |
| 90 | 138300 |
| 95 | 170300 |

Table 6 shows the relationship between methane recovery and flow rate of alternative ionic liquid absorbent with ten times lower Henry's law constant for methane absorption than BmimPF6, or namely an H equal to 148 bar.

Table 6

| Methane recovery % | IL flow rate (Umin) |
|---|---|
| 63 | 5290 |
| 70 | 6650 |
| 80 | 9340 |
| 90 | 13590 |

(continued)

| Methane recovery % | IL flow rate (Umin) |
|---|---|
| 95 | 16780 |

For this case with a Henry's law constant for methane of 148 bar versus 1480 bar and a target methane recovery of 90%, then roughly 13,600 Umin of an ionic liquid would be required for the 2,000,000 standard cubic feet per day application in this example to recover 90% of the methane with a purity exceeding 98% from a feed mixture of 80% methane. For this case with recuperation of 0.5 C at each end of the heat exchanger, then less than a 0.5 MW of thermal energy would be required for the methane separation to a purity exceeding 98% from a feed of 80%. For this system the thermal energy content of the purified methane is roughly 17 MW which does not account for losses of conversion from thermal energy to work. Using a typical conversion efficiency of a gas fired power plant of roughly 65%, then the total net work generated from this capacity system is roughly 11 MW. The total parasitic power requirement to drive this system is less than 10% of the total, and for this example less than 5% of the work generated from the purified methane. For the extreme case where a 0.1 C approach temperature is maintained for the heat exchanger, then with the improved absorbent, likely an ionic liquid, then the total parasitic thermal power required is roughly 0.1 MW which represents on the order of a 1 % parasitic power loss. Further it is possible to consider the recovery of a higher fraction of methane beyond 90%. In one embodiment, 92%, or 95%, or 97%, or 99% of the methane is captured from the system. As the absorption capacity increases, the ease of efficiently capturing more of the methane in a one-pass system improves.

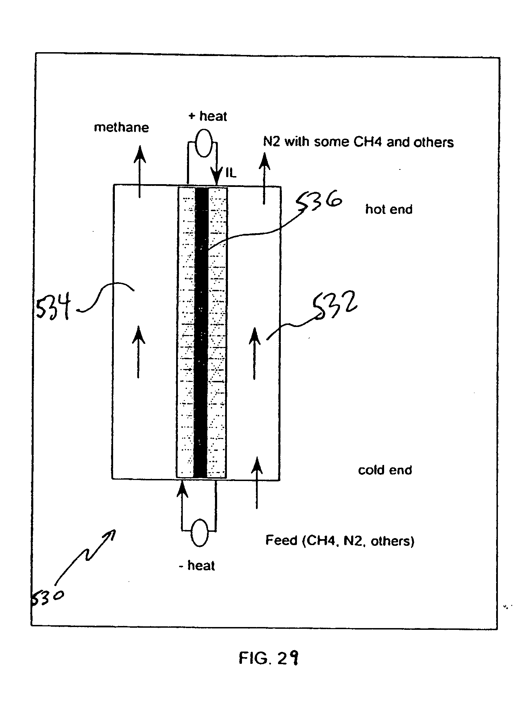

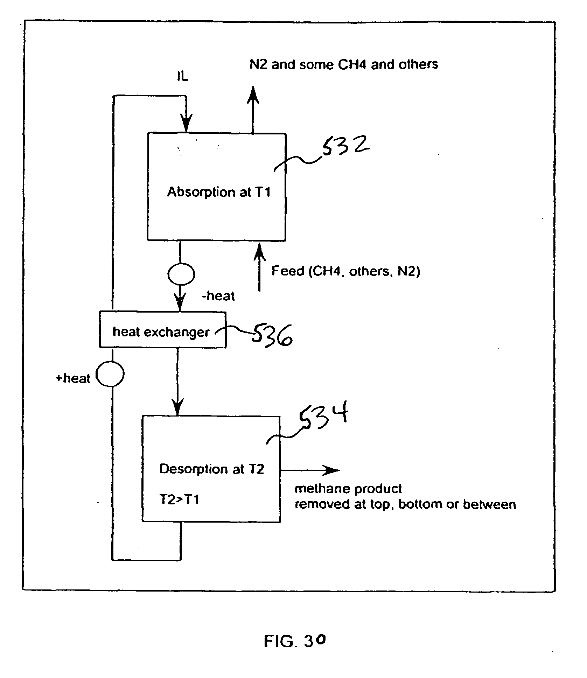

In another exemplary embodiment, a multi-stage absorption system employing counterflow of an ionic liquid and the feed gas enables the use of a reduced volume of the ionic liquid absorbent. The heat is recuperated between hot and cold devices or ends of a device as shown in FIG. 29. The recuperation of heat, using a heat exchanger 536, for example, reduces the amount of parasitic energy loss for an advantaged system. The further advantage of the counterflow absorption system is the enablement of multiple stages for separation which reduces the required inventory of the ionic liquid. This approach typically requires contacting the two phases in a counterflow mode. The absorber 532 and desorber 534 units could be separate unit operations as shown in FIG. 30 or integrated in a single unit operation or block as shown in FIG. 29.

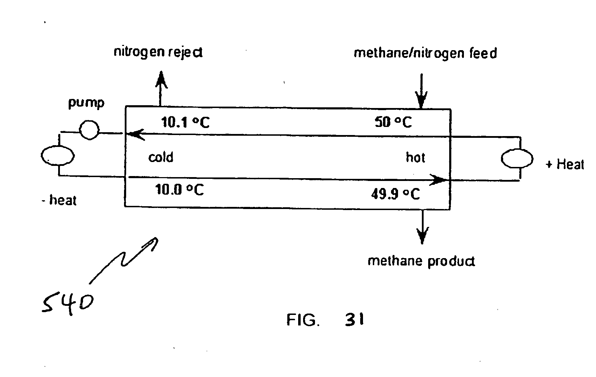

In another exemplary embodiment shown in FIG. 31, a microchannel heat exchanger 540 is used to recuperate ionic liquid sorbent. It is typically advantageous to reduce the parasitic energy loss in the absorption/desorption process of, for example, methane into ionic liquid for separation, in order to make the system operation economical. This means to reduce the energy input "-heat" or "+heat" in the system, which is equivalent to having a heat recuperation with very tight temperature approach at the hot and cold end. Thus, a superior heat exchanger is desired.

In the exemplary embodiment, a microchannel heat exchanger/recuperator 540 is utilzed. An exemplary microchannel heat exchanger is disclosed here in a design example of the following performance conditions:

Liquid flow rate: 54,000 Umin; closed loop system

CP = 1407 J/mol-K

density = 1.37 gm/cc

viscosity = 30 cP

$T_{max}$ = 50 C

$T_{low}$ = 10 C

Thermal conductivity= 0.19 W/m-K

Approach temperature target 0.1 to 0.25 K on each end.

Liquid volume 1000-10000 liters

Material: stainless steel

In another exemplary embodiment, a microchannel apparatus using co- current contacting of methane- rich vapor and liquid absorbent streams in a micro- channel allows very fast and efficient mass transfer between the two streams prior to phase separation. An experimental test stand was designed for versatility to allow handling and processing of a wide range of liquid absorbents and gaseous stream compositions, flow rates, and temperatures. The processes include the use of the 1- butyl- 3- methylimidazolium hexafluorophosphate, [bmim] [PF6] , ionic liquid absorbent and a gaseous stream of 70% nitrogen, 15% carbon monoxide, and 15% methane, for example.

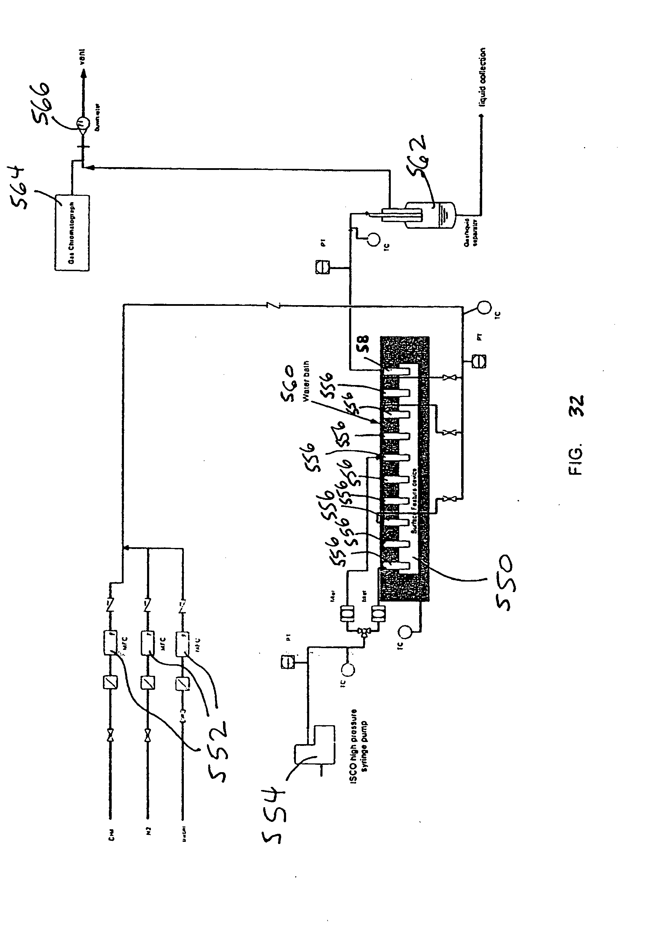

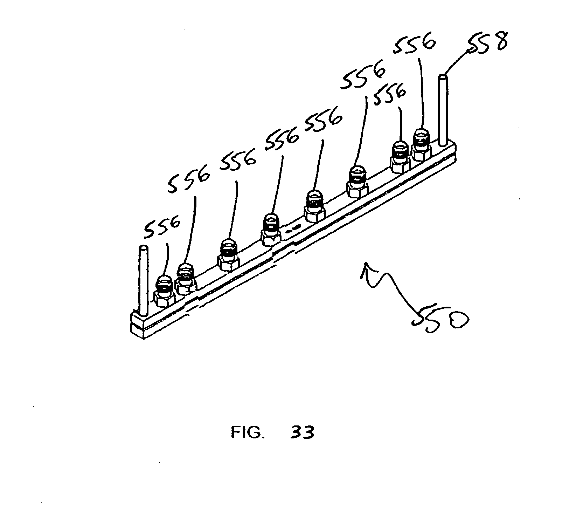

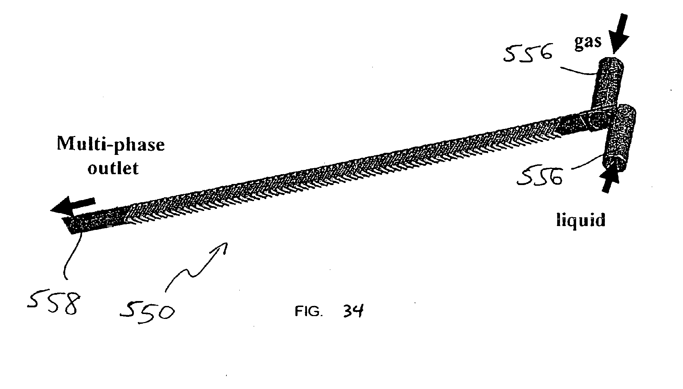

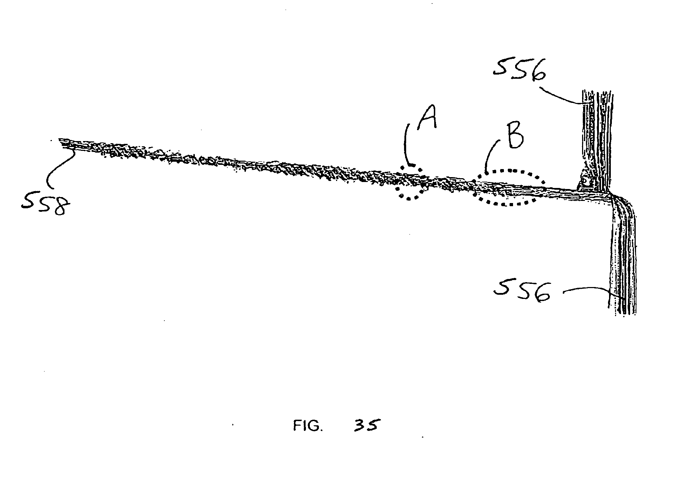

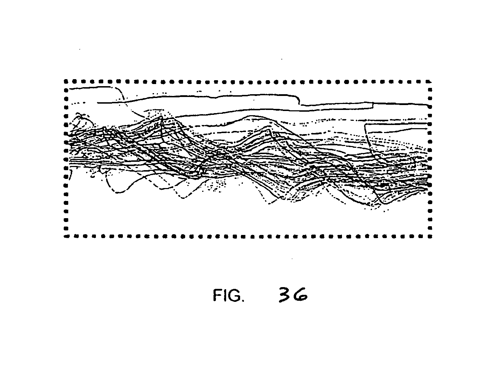

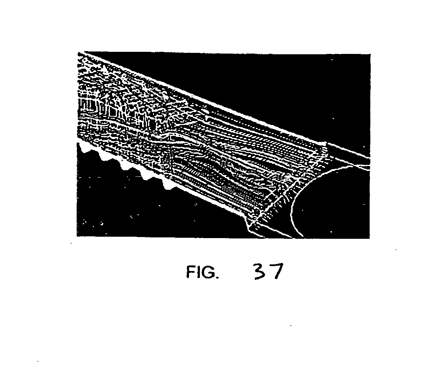

As is shown in FIG. 32, the exemplary assembly centers about a horizontally mounted, 12" long, micro-channel device, shown in FIGS. 33 and 34. The device configuration can be modified to incorporate flat or mixing features embedded in the walls. Computational fluid dynamics (CFD) results (shown in FIGS. 35-37) show enhanced phase mixing resulting from the use of embedded floor mixing features within the microchannel. The improved mixing is expected to increase the interfacial area and the ease of achieving the target solubility of the methane in the ionic liquid.

In the exemplary embodiment, vapor feed flows are regulated by Brooks Thermal mass flow controllers 552. The liquid is fed by an ISCO high pressure syringe pump 554. Feed streams can enter the device through a number of ports 556, strategically located along its axis. All streams exit the device through the same exit port 558. Testing can be performed with single phases or multiphase mixtures. Thermocouples and pressure transducers, inserted along the device length, allow measurement of temperatures and pressure drops. The device is immersed in a controlled temperature bath 560. System pressure is controlled by throttling needle valves appropriately located in the vapor exit path. Immediately downstream of the device, the phases are separated by passing through a gas/liquid separating drum 562. The liquid is collected in a dedicated pressure vessel. The vapor stream composition is analyzed via an Agilent 3000 Micro gas chromatograph 564, Model G2891A, to allow instantaneous measurement of vapor exit stream compositions. The vapor stream flows through a bubble meter 566, for measurement of vapor exit flow rate. Metal system components are 316 stainless steel, and all soft components are compatible with the corrosive ionic liquids.

In the exemplary embodiment, liquid and vapor streams enter the device through ports 556 along the device axis, flow co-currently, and exit the device through a single outlet port 558. The device includes a mixing plate with embedded features in the channel floor to mix the gas and liquid stream and increase the interfacial area for good contacting and mass transfer. The floor of the microchannel contains an array of parallel mixing features that act to push and pull the fluid and create small bubbles with high interfacial area.

Referring to FIGS, 35-37, the otherwise straight laminar flow patterns are broken, suggesting enhanced phase mixing.

All system pressures and temperatures may be recorded, at a variable 5 to 30 second intervals, for example, depending on the needs of the particular experiment. A LabView 7.1 data acquisition program specifically prepared for the microchannel test stand will be used. Real time profiles will also be monitored during the run to help determine system equilibration.

In general, operations of the exemplary system may include step such as:

1. Calibrate the GC, adopting standard calibration gases spanning the concentrations of interest.

2. Synchronize the time of the GC and LabView computers.

3. Open the gas feed line(s) of interest.

4. Select the gas feed port, decide on the intended vapor feed flow rates and set the mass flow controllers accordingly.

5. Let the gas mixture pass through the device and measure the compositions of the feed stream, reporting all absolute measurements and ratios relative to the tracer feed, carbon monoxide. Assume the system has stabilized when three consecutive sample measurements are replicated.

6. When the system has settled, measure and report three consecutive bubble flow meter readings.

7. Decide the intended system operating/exit pressure and throttle the exit needle valves accordingly.

8. Set the liquid feed port and start feeding liquid to the system, modifying the exit needle valve opening to maintain the intended operating/exit pressure.

9. Measure the exit vapor stream compositions as a function of time.
Measure the corresponding total exit vapor flow rate, as necessary.

10. Assume the absorption system has reached steady state when the exit feed compositions have stabilized.

The extent of absorption may be determined by ratioing the exit vapor stream compositions to the tracer value.

Literature values of Henry's constant for the species of interest (Anthony, Maginn, and Brennecke, "Solubilities and Thermodynamic Properties of Gases in the Ionic Liquid 1- n- Butyl- 3- methylimidazolium Hexafluorophosphate, " J. Phys. Chem. B., vol. 106 (29) , 2002) may be used to determine the maximum potential methane absorption for the given run conditions. The actual and maximum absorption values may be ratioed to gauge the performance of the multiphase absorption system.

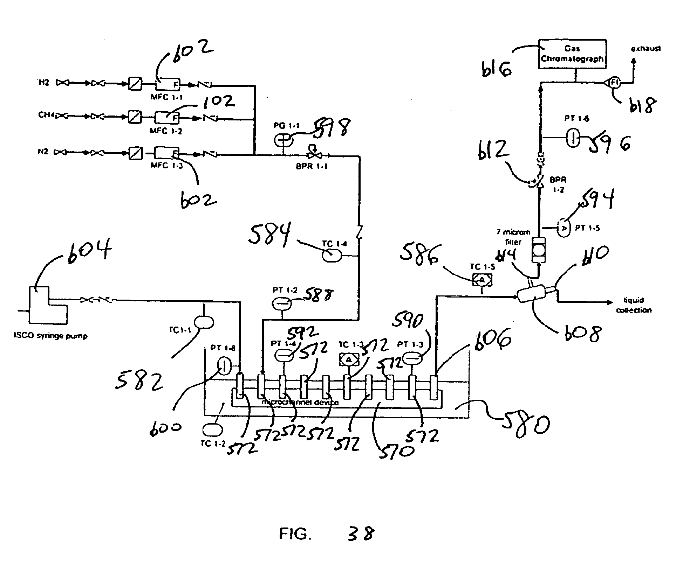

Another exemplary embodiment is shown in FIG. 38. The continuous flow configuration allows co-current contacting of mixed vapor and liquid streams in a microchannel 570. The high interfacial area and the short diffusion distances that are inherent to microchannel processing lead to very fast and efficient mass transfer between streams.

The exemplary experimental test stand was designed for versatility, allowing handling and processing of a wide range of liquid absorbents and gaseous stream compositions, flow rates, and temperatures. Ports 572, distributed along the length of the 12 in-long microchannel 570, allow fast changes in feed location, potential staggering of feed streams and feed compositions, and pressure transducer placement to fit specific run needs. Metal system components are 316 stainless steel; all soft components are compatible with the ionic liquids.

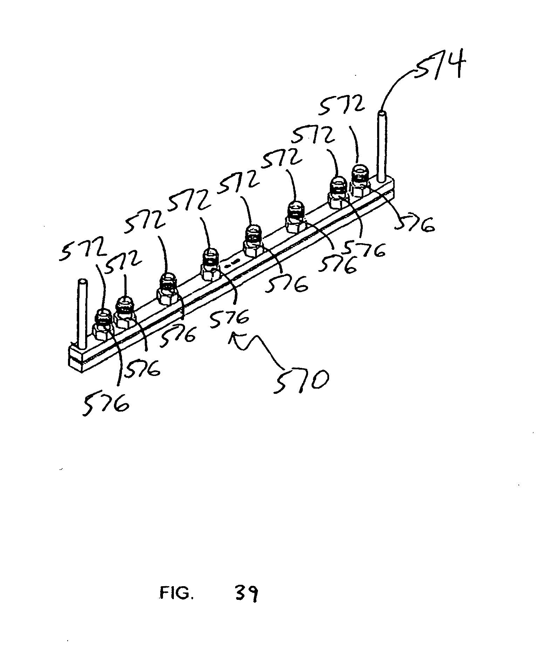

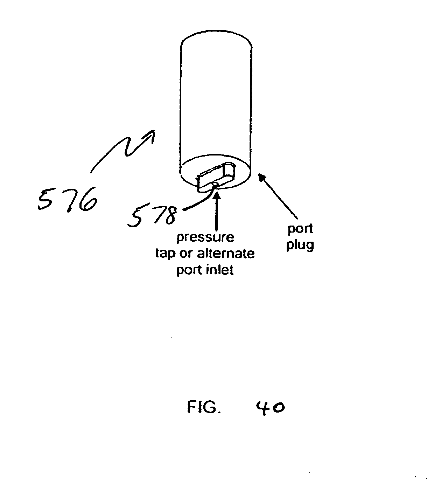

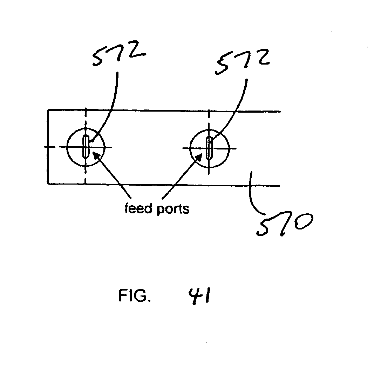

Detailed aspects of the exemplary device 570 are shown in FIGS. 39-41. Liquid and vapor streams enter the device through ports 572 along the device axis, flow co-currently, and exit the device through a single outlet port 574. The internal channel may be flat or incorporate surface features to promote mixing and interaction of the gas and liquid streams.

The feed ports 572 are 0.040 in-wide and span the width of the main channel, rendering the feed and stream merging uniform. The specifically designed plugs 576 fit flush with the internal main channel surface and minimize disruption in the main flow path. A 0.010 in diameter hole 78 in the center of each plug 576 allows pressure measurement or serves as an alternate means of introducing the feed. The device can be assembled as a flat channel or to incorporate mixing features embedded in the walls.

As is shown in FIG. 38, the exemplary microchannel 570 device is mounted horizontally in a temperature regulated water bath 580. The device is capable of withstanding up to 1800 psig at 150°C. Omega thermocouples 582, 584, 586, placed in the inlet and outlet flow paths, allow measurement of temperature changes during operation. Pressure transducers 586, 588, 590, 592, 594, 596, 598, 600 are used to measure process pressures and pressure drops. Temperatures and pressures are constantly monitored and the values collected using the Labview software allow complete mapping of operational profiles.

Vapor feed flows are regulated by Brooks Thermal mass flow controllers 602. The liquid is fed by an ISCO high pressure syringe pump 604. Testing can be performed with single phases or multiphase mixtures. In the exemplary device, all streams exit through the same exit port 606. During multiphase operation, the liquid and vapor are separated in a knock-out drum 608 immediately downstream of the exit port 606. Whether operated as a single or multi-phase system, vapor and liquid are always let flow out of the knockout drum 608. Liquid is always removed through the lower line 610 in the knock-out pot and let flow into a collection vessel. A needle valve controls the removal of gas from the headspace of the collection vessel 608 to the atmosphere. In a multiphase run, vapor is removed through the upper port 614 in the knock-out pot 608. The headspace in the liquid collection vessel is connected to the vapor exit line 614 to ensure pressure equilibration and free flow and removal of liquid from the knock-out pot 608 into the collection vessel. A back pressure regulator 612, downstream of the vapor headspace connection line 614, controls system pressure.

The back pressure regulator 612 reduces the pressure of the vapor stream from the knock-out pot 608 as it flows towards the gas chromatograph (GC) 616, prior to being exhausted to the atmosphere. Careful throttling of the needle valve on the collection vessel may be required to ensure that the headspace from the collection vessel flows directly to exhaust without being forced back towards the GC line; this is critical to ensuring accurate measurement of the instantaneous composition of the gas stream exiting the microchannel device 570. Flow meters 618 in the headspace removal line of the collection vessel and at the GC exit port help control the needle valve setting. As long as the vapor flow rate from the collection vessel exceeds the flow rate that results from vapor displacement by the liquid entering the collection vessel, the GC measurement is ensured to reflect the vapor composition in the knock-out pot 608.

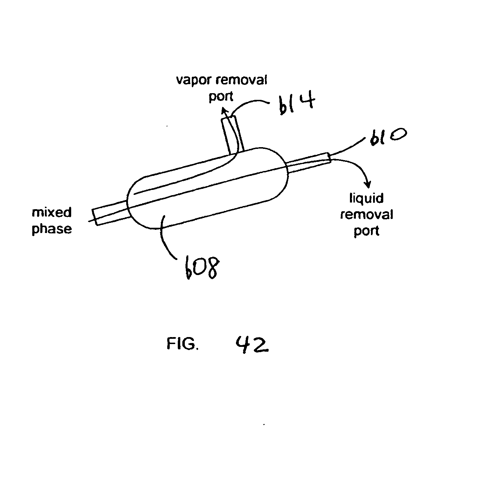

Complete and fast purging of the knock out pot 608 is also important to obtaining response that reflects the instantaneous composition of the vapor stream exiting the channel. A knock-out pot 608 configuration was specifically put in place to help the purging process in the exemplary embodiment, as shown in FIG. 42. Gas and liquids flow co-currently through the knock-out pot 608, leading to minimal vapor backflow and most effective headspace purging. The headspace is also held as small as possible to minimize the purge rate. Because increased pressures lead to an increase in the vapor density and a corresponding reduction in vapor flow rate, the headspace purge rate decreases with increased pressure. When conducting the tests, consideration needs to be given to the fact that the system response time decreases as the test pressure increases.

The general procedure for continuous multi-phase flow testing may involve the steps outlined below. These do not include preliminary calibrations and system and valve setting checks required for safe and appropriate operation of the stand.

1. Fill the ambient water bath and ensure proper placement of the bath thermocouple. Turn on the bath mixer and set the water bath temperature.

2. Synchronize the date and time of the GC and Labview computers and start Labview recording.

3. Pressurize the system to the required downstream pressure using nitrogen gas.

4. Set the feed vapor flow rate to correspond to the sum of the intended gas feed flow rate and the expected vapor compensation flow rate (to compensate for gas displacement by the flowing liquid during operation).

5. Pre-regulate the back-pressure regulator and the needle valve on the knock-out pot to let the required amounts of vapor flow from each valve (this is a rough value that is refined once the test is started).

6. Switch the gas stream to the intended mix and reduce the vapor gas feed flow rate to the required setting for the testing.

7. Start feeding liquid to the stand, beginning with a flow rate that is less than 10% of the intended test value.

8. Gradually ramp the liquid flow rate to the required setting (ensuring that the upstream pressure does not exceed the predefined safe limit).

9. Allow enough time to fill the knockout pot with liquid to the minimum required level to prevent backflow of vapor from the collection vessel to the knockout pot via the liquid exit line. This also leads to a reduction in the headspace volume of the knock-out pot and a faster knock-out pot purge rate.

10. Refine the setting of the back pressure regulator and needle valve to ensure the proper flow distribution through the exit vapor stream lines (ensuring that all of the compensation gas displaced by the flowing liquid during operation is removed through the needle valve on the knock out pot and does not feed back into the GC line).

11. Measure the vapor stream concentrations periodically and frequently throughout the testing, allowing enough time for purging of the knock-out drum headspace and equilibration of the microchannel flow system (i.e., until no more changes in the exit stream concentrations are seen).

12. Re-measure feed compositions before shutting down the stand to double-check consistency and reproducibility of the GC measurements.

The effectiveness of any given experimental absorption run may be gauged by comparing the measured moles of each species absorbed/desorbed with the amount expected to have been absorbed/desorbed if complete saturation, as dictated by vapor-liquid equilibrium, defined with Henry's law, is achieved at the exit of the device.

Hence, the total molar flow rate and the inlet molar flow rates of each species in the system are calculated from the inlet liquid and vapor flow rates and compositions, as follows,

$$\dot{Q} = \dot{L}_{inlet} + \dot{V}_{inlet} \quad (1)$$

$$\left( \dot{m}_i = x_i \dot{L} + y_i \dot{V} \right)_{inlet}, \text{ where} \quad (2)$$

$\dot{L}$, $\dot{V}$ = total liquid and vapor molar flow rates,
$\dot{m}_i$ = molar flow rate of species i through the system,
$\dot{Q}$ = total molar flow rate through the system,
$x_i$, $y_i$ = liquid and vapor mole fractions of species i.

The expected molar flow rates and species distributions at the exit point are calculated by simultaneous solution of the following equations:

total mass balance,

$$\dot{L}_{exit} + \dot{V}_{exit} = \dot{Q} \qquad (3)$$

individual species mass balances,

$$\left( \dot{m}_i = x_i \dot{L} + y_i \dot{V} \right)_{exit} \qquad (4)$$

Henry's law for each species in the system,

$$\left( H_i = \frac{P y_i}{x_i} \right)_{exit} \qquad (5)$$

molar balances for all species in the vapor phase,

$$\left( \sum y_i = 1 \right)_{exit} \qquad (6)$$

molar balance for all species in the liquid phase,

$$\left( \sum x_i = 1 \right)_{exit} \qquad (7)$$

where the ionic liquid is assumed to be non-volatile. All other components can move into and out of each phase.

For easy implementation into a data-logger format, an Excel spreadsheet was specifically created for the calculations. Generally, it requires input of Henry's constants for each species, input of the initial vapor and liquid flow rates (in ccm and sccm, respectively), input of ambient and device inlet and outlet pressures and temperatures, input of GC measured inlet species concentrations in the vapor phase and appropriately measured inlet species concentrations in the liquid phase, and input of the vapor flow rate exiting the test stand through both the GC line and the knock-out drum.

This information is used to explicitly calculate the inlet values of $\dot{Q}$ and $\dot{m}_i$, using Equations 1 and 2. Equations 3 through 7 are solved simultaneously using the Excel "goal seek" tool. For this, the vapor mole fraction of each species at the exit point is calculated by rearranging Equations 3 through 7 in terms of $\dot{V}_{exit}$ and known variables,

$$\left( y_i = \frac{\dot{m}_i}{\dot{V} + \dfrac{P\dot{Q}}{H_i} - \dfrac{P\dot{V}}{H_i}} \right)_{exit} \qquad (8)$$

an initial value for the vapor exit flow rate, $\dot{V}_{exit}$, is selected (the inlet molar vapor flow rate is a good initial estimate) and let vary to satisfy Equation 6 (in the "goal seek" function), and the validity of Equation 7 is checked to ensure satisfaction of all conditions.

Finally, the effectiveness of the experimental absorption run for each species, $\xi_i$, is calculated with the following expression:

$$\xi_i = \frac{\left| (y_i \dot{V})_{exit} - (y_i \dot{V})_{inlet} \right|_{measured}}{\left| (y_i \dot{V})_{exit} - (y_i \dot{V})_{inlet} \right|_{calculated}} 100 \text{, where} \qquad (9)$$

$$\dot{V}_{exit\ measured} = \dot{V}_{exit\ GC} + \dot{V}_{exit\ KO\ drum} \quad (10)$$

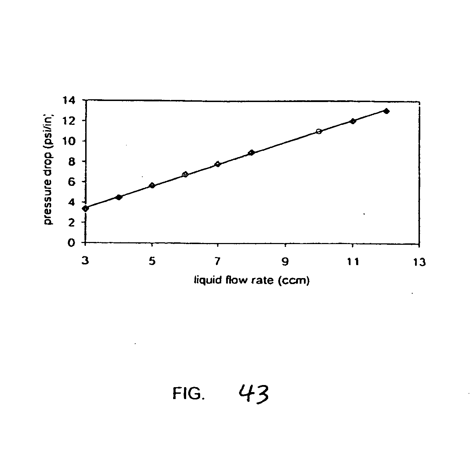

A single flow through test run was completed to preliminarily gauge absorption performance and allow test protocol refinement. Mixing features were incorporated in the channel sidewalls to provide enhancement in interfacial mass transfer. A 96wt% ionic liquid, 4wt% water liquid mixture (whose absorption capacity was previously tested in the batch trials; ionic liquid code A) was adopted for methane absorption from a vapor stream containing nitrogen, methane and hydrogen gases. Addition of water to the ionic liquid reduces liquid viscosity, reducing the operating pressure drop. The vapor stream was fed at a constant flow rate; the liquid flow rate was varied to achieve different levels of absorption. Downstream pressure was varied to retain a relatively consistent feed pressure, not to exceed a predefined operational range. Testing was performed at room temperature. Pressure drop was measured for a variety of liquid flow rates. The extent of absorption was measured for two liquid flows. The assumed Henry's constants for each species and the absorption test results are summarized in Table 7. Pressure drop profiles are plotted in FIG. 43.

Table 7

| bath temperature, °C | | 20 | 20 |
|---|---|---|---|
| vapor feed flow rate, sccm | | 100 | 100 |
| liquid feed flow rate, ccm | | 6 | 8 |
| feed pressure, psig | | 313 | 309 |
| knock out drum pressure, psig | | 246 | 221 |

| | assumed H, bar/mol fraction | measured vapor concentration, mol fraction | | | |
|---|---|---|---|---|---|
| | | feed | exit | feed | exit |
| N2 | 20,000 | 0.030 | 0.048 | 0.030 | 0.034 |
| H2 | 20,000 | 0.900 | 0.899 | 0.900 | 0.891 |
| CH4 | 766 | 0.080 | 0.076 | 0.080 | 0.074 |
| % of maximum CH4 absorption capacity | | 42 | | 31 | |

As shown in Figure 43, at the flow rates considered, pressure drop increases linearly with increasing liquid flow rate. This dependence may be indicative of a relatively laminar flow profile, attributable to the very small vapor and liquid flows adopted in these preliminary trials. As tabulated in Table 7, increased liquid flow rates at these operating conditions led to decreased absorption efficiency but increased methane absorption.

Preliminary absorption trials involving co-currently flowing vapor and liquid absorbent streams were performed using the exemplary microchannel test stand. The absorption capacity varied between 31 and 42% of the theoretical capacity as determined by the previous batch experiments.

Increasing interfacial area may improve effective mass transfer across phases. The use of ionic liquids for preferential absorption of species from a vapor stream is exemplary of the type of process that can benefit from enhancements obtainable by processing on the micro-scale. Because species diffusivity through the liquid phase is relatively low, reduced diffusion thicknesses can have a significant impact on process effectiveness.

In an exemplary process involving absorption of a 1000 sccm pure methane vapor stream into a [hmim] [FAP] ionic liquid stream with a Henry's constant of 230 bar/ mole fraction, one can expect to be able to absorb 100% of the methane (at room temperature and under a driving force of 10 atm) by flowing the liquid (with a density of 1.56 g/cc) at a flow rate of 268 ccm. For a given set of feed stream compositions, counter- current operation may lead to increased driving force for mass transfer, but counter- current flooding limits may reduce the window of operation and make processing in co- current mode more flexible and practical.

A rough estimate of co-current and counter-current performance can be made by disregarding the reduction in vapor flow with absorption, assuming liquid-side dominated mass transfer, an overall mass transfer coefficient, $K_L a$, and a pressure drop that are not impacted by flow direction, and the following expression for the rate of species absorption, $r_i$,

$$r_i = K_L a \left( C_i^{\bullet} - C_i \right)_{log\ mean}$$

where $C_i^{\bullet}$ and $C_i$ are the absorbed species concentrations at the liquid interface and in the bulk, respectively. The log mean values relate to the differences at the liquid inlet and outlet ports.

For a 10 atm driving force, a 0.7 atm pressure drop along the liquid flow direction, a 0.8 absorption efficiency (ratio of the absorbed species concentration in the liquid at the exit port to the maximum achievable absorbed species concentration in the liquid), counter-current operation leads to twice the driving force of co-current operation. The less than order of magnitude enhancement and the decreased capacity of counter-current operation may warrant the adoption of co-current flow.

Processing through solid foams may permit a significant reduction in pressure drop relative to processing through packed beds. Because of their relatively high pure fluid viscosity, ionic liquid processing stands to gain from the use of such high porosity, microscale structures that help maximize interaction while minimizing pressure drop and pumping power needs.

The exemplary embodiments described here may include the use of a system to absorb at least one or more solutes at one temperature or temperature range and desorb said solutes at a second temperature or temperature range.

While exemplary embodiments of the invention have been set forth above for the purpose of disclosure, modifications of the disclosed embodiments of the invention as well as other embodiments thereof may occur to those skilled in the art. Accordingly, it is to be understood that the inventions contained herein are not limited to the above precise embodiments and that changes may be made without departing from the scope of the invention as defined by the claims. Likewise, it is to be understood that it is not necessary to meet any or all of the stated advantages or objects of the invention disclosed herein to fall within the scope of the invention, since inherent and/or unforeseen advantages of the present invention may exist even though they may not have been explicitly discussed herein.

**Claims**

1. A method for separating components of a fluid, said method comprising providing a processing device comprising:

   a first microchannel (12) including a first absorbent inlet, a first absorbent outlet, a feed stream inlet (16), and a first resultant gas outlet (18);
   **characterised in that** the processing device comprises a second microchannel (14) including a second absorbent inlet, a second absorbent outlet, and a second resultant gas outlet (20) and the second microchannel (14) is arranged in a counterflow arrangement relative to the first microchannel (12);
   wherein said method comprises feeding a gaseous mixture into the processing device through the feed stream inlet (16);
   circulating a liquid absorbent through the first microchannel (12) and the second microchannel (14);
   contacting said gaseous mixture with said liquid absorbent while within the first microchannel (12) to absorb at least a portion of a first component of the gaseous mixture by the liquid absorbent, thereby creating a first resultant mixture including a first resultant gas and the liquid absorbent;
   directing the first resultant gas away from the liquid absorbent and through the first resultant gas outlet (18);
   desorbing at least some of the first component from the liquid absorbent while within the second microchannel (14), thereby creating a second resultant mixture including a second resultant gas and the liquid absorbent;
   directing the second resultant gas away from the liquid absorbent and through the second resultant gas outlet (20);
   wherein the liquid absorbent has a temperature T1 at the first inlet, a temperature T2 at the first outlet, a temperature T3 at the second inlet, and a temperature T4 at the second outlet;
   wherein:

   (i) at least one of the following conditions is satisfied: T2 is greater than T3 and T1 is greater than T4; or
   (ii) at least one of the following conditions is satisfied: T3 is greater than T2, T4 is greater than T1, and T2 is greater than T4.

2. The method according to claim 1, wherein at least one of the following conditions is satisfied: T2 is greater than T3 and T1 is greater than T4.

3. The method of claim 2, wherein the liquid absorbent has a Henry's law constant that increases with temperature; and wherein T4 is greater than T2.

4. The method of claim 2, wherein the gaseous mixture includes nitrogen and carbon dioxide, the first resultant gas has a higher concentration of nitrogen than the gaseous mixture, and the second resultant gas has a higher concentration of carbon dioxide than the flue gas feed.

5. The method of claim 2, wherein the gaseous mixture includes at least one hydrocarbon and nitrogen, the first resultant gas has a higher concentration of nitrogen than the gaseous mixture, and the second resultant gas has a higher concentration of the at least one hydrocarbon than the gaseous mixture.

6. The method of claim 2, wherein the gaseous mixture includes at least one hydrocarbon and at least one contaminant, the first resultant gas has a higher concentration of the hydrocarbon than the gaseous mixture, and the second resultant gas has a higher concentration of the contaminant than the gaseous mixture.

7. The method of claim 6, wherein the gaseous mixture is a natural gas feed and the contaminant is at least one of H2S, a thiol, and another sulfur-containing compound.

8. The method of claim 7, further comprising a first Fischer-Tropsch reactor, where the feed stream inlet is coupled to an outlet of the Fischer-Tropsch reactor.

9. The method of claim 2, wherein at least one of the following conditions is satisfied: a difference between T1 and T4 is less than 10 C and a difference between T2 and T3 is less than 10 C.

10. The method of claim 1 wherein at least one of the following conditions is satisfied: T3 is greater than T2, T4 is greater than T1, and T2 is greater than T4.

11. The method of claim 10, wherein the gaseous mixture includes nitrogen and oxygen, the first resultant gas has a higher concentration of nitrogen than the gaseous mixture, and the second resultant gas has a higher concentration of oxygen than the gaseous mixture.

12. The method of claim 10, wherein the gaseous mixture includes at least one hydrocarbon and at least one contaminant, the first resultant gas has a higher concentration of the hydrocarbon than the gaseous mixture, and the second resultant gas has a higher concentration of the contaminant than the gaseous mixture.

13. The method of claim 12, wherein the gaseous mixture is a natural gas feed and the contaminant is at least one of H2S, a thiol, and another sulfur-containing compound.

14. The method of claim 10, wherein at least one of the following conditions is satisfied: a difference between T1 and T4 is less than 10 C, and a difference between T2 and T3 is less than 10 C.

15. The method of any one of claims 1 to 14, wherein the liquid absorbent comprises an ionic liquid.

**Patentansprüche**

1. Ein Verfahren zum Trennen von Bestandteilen eines Fluids, wobei das Verfahren Folgendes beinhaltet: Bereitstellen einer Verarbeitungsvorrichtung, die Folgendes beinhaltet:

einen ersten Mikrokanal (12), der einen ersten Absorptionsmitteleinlass, einen ersten Absorptionsmittelauslass, einen Zufuhrstromeinlass (16) und einen ersten Auslass (18) für resultierendes Gas umfasst; **dadurch gekennzeichnet, dass** die Verarbeitungsvorrichtung einen zweiten Mikrokanal (14) beinhaltet, der einen zweiten Absorptionsmitteleinlass, einen zweiten Absorptionsmittelauslass und einen zweiten Auslass (20) für resultierendes Gas umfasst, und der zweite Mikrokanal (14) relativ zu dem ersten Mikrokanal (12) in einer Gegenstromanordnung angeordnet ist; wobei das Verfahren das Zuführen einer gasförmigen Mischung durch den Zufuhrstromeinlass (16) in die Verarbeitungsvorrichtung beinhaltet; Zirkulieren eines flüssigen Absorptionsmittels durch den ersten Mikrokanal (12) und den zweiten Mikrokanal (14); In-Kontakt-Bringen der gasförmigen Mischung mit dem flüssigen Absorptionsmittel, während innerhalb des ersten Mikrokanals (12), um mindestens einen Anteil eines ersten Bestandteils der gasförmigen Mischung durch das flüssige Absorptionsmittel zu absorbieren, dadurch Erzeugen einer ersten resultierenden Mischung, die ein erstes resultierendes Gas und das flüssige Absorptionsmittel umfasst;

Wegleiten des ersten resultierenden Gases von dem flüssigen Absorptionsmittel und durch den ersten Auslass (18) für resultierendes Gas;

Desorbieren mindestens eines Teils des ersten Bestandteils aus dem flüssigen Absorptionsmittel, während innerhalb des zweiten Mikrokanals (14), dadurch Erzeugen einer zweiten resultierenden Mischung, die ein zweites resultierendes Gas und das flüssige Absorptionsmittel umfasst;

Wegleiten des zweiten resultierenden Gases von dem flüssigen Absorptionsmittel und durch den zweiten Auslass (20) für resultierendes Gas;

wobei das flüssige Absorptionsmittel eine Temperatur T1 an dem ersten Einlass, eine Temperatur T2 an dem ersten Auslass, eine Temperatur T3 an dem zweiten Einlass und eine Temperatur T4 an dem zweiten Auslass aufweist;

wobei:

(i) mindestens eine der folgenden Bedingungen erfüllt ist: T2 ist größer als T3 und T1 ist größer als T4; oder

(ii) mindestens eine der folgenden Bedingungen erfüllt ist: T3 ist größer als T2, T4 ist größer als T1 und T2 ist größer als T4.

2. Verfahren gemäß Anspruch 1, wobei mindestens eine der folgenden Bedingungen erfüllt ist: T2 ist größer als T3 und T1 ist größer als T4.

3. Verfahren gemäß Anspruch 2, wobei das flüssige Absorptionsmittel eine Henry-Konstante aufweist, die mit der Temperatur zunimmt, und wobei T4 größer als T2 ist.

4. Verfahren gemäß Anspruch 2, wobei die gasförmige Mischung Stickstoff und Kohlendioxid umfasst, wobei das erste resultierende Gas eine höhere Konzentration an Stickstoff aufweist als die gasförmige Mischung und das zweite resultierende Gas eine höhere Konzentration an Kohlendioxid aufweist als die Abgaszufuhr.

5. Verfahren gemäß Anspruch 2, wobei die gasförmige Mischung mindestens einen Kohlenwasserstoff und Stickstoff umfasst, wobei das erste resultierende Gas eine höhere Konzentration an Stickstoff aufweist als die gasförmige Mischung und das zweite resultierende Gas eine höhere Konzentration des mindestens einen Kohlenwasserstoffs aufweist als die gasförmige Mischung.

6. Verfahren gemäß Anspruch 2, wobei die gasförmige Mischung mindestens einen Kohlenwasserstoff und mindestens einen Kontaminationsstoff umfasst, wobei das erste resultierende Gas eine höhere Konzentration des Kohlenwasserstoffs aufweist als die gasförmige Mischung und das zweite resultierende Gas eine höhere Konzentration des Kontaminationsstoffes aufweist als die gasförmige Mischung.

7. Verfahren gemäß Anspruch 6, wobei die gasförmige Mischung eine Erdgaszufuhr ist und der Kontaminationsstoff mindestens eines von H2S, einem Thiol und einer anderen schwefelhaltigen Verbindung ist.

8. Verfahren gemäß Anspruch 7, das ferner einen ersten Fischer-Tropsch-Reaktor beinhaltet, wobei der Zufuhrstromeinlass an einen Auslass des Fischer-Tropsch-Reaktors gekoppelt ist.

9. Verfahren gemäß Anspruch 2, wobei mindestens eine der folgenden Bedingungen erfüllt ist: ein Unterschied zwischen T1 und T4 ist geringer als 10 °C und ein Unterschied zwischen T2 und T3 ist geringer als 10 °C.

10. Verfahren gemäß Anspruch 1, wobei mindestens eine der folgenden Bedingungen erfüllt ist: T3 ist größer als T2, T4 ist größer als T1 und T2 ist größer als T4.

11. Verfahren gemäß Anspruch 10, wobei die gasförmige Mischung Stickstoff und Sauerstoff umfasst, wobei das erste resultierende Gas eine höhere Konzentration an Stickstoff aufweist als die gasförmige Mischung und das zweite resultierende Gas eine höhere Konzentration an Sauerstoff aufweist als die gasförmige Mischung.

12. Verfahren gemäß Anspruch 10, wobei die gasförmige Mischung mindestens einen Kohlenwasserstoff und mindestens einen Kontaminationsstoff umfasst, wobei das erste resultierende Gas eine höhere Konzentration des Kohlenwasserstoffs aufweist als die gasförmige Mischung und das zweite resultierende Gas eine höhere Konzentration des Kontaminationsstoffes aufweist als die gasförmige Mischung.

13. Verfahren gemäß Anspruch 12, wobei die gasförmige Mischung eine Erdgaszufuhr ist und der Kontaminationsstoff mindestens eines von H2S, einem Thiol und einer anderen schwefelhaltigen Verbindung ist.

**14.** Verfahren gemäß Anspruch 10, wobei mindestens eine der folgenden Bedingungen erfüllt ist: ein Unterschied zwischen T1 und T4 ist geringer als 10 °C und ein Unterschied zwischen T2 und T3 ist geringer als 10 °C.

**15.** Verfahren gemäß einem der Ansprüche 1 bis 14, wobei das flüssige Absorptionsmittel eine ionische Flüssigkeit beinhaltet.

## Revendications

**1.** Une méthode destinée à séparer des composants d'un fluide, ladite méthode comprenant le fait de fournir un dispositif de traitement comprenant :

un premier microcanal (12) comportant une première entrée d'absorbant, une première sortie d'absorbant, une entrée de flux d'alimentation (16), et une première sortie de gaz résultant (18) ;
**caractérisée en ce que** le dispositif de traitement comprend un deuxième microcanal (14) comportant une deuxième entrée d'absorbant, une deuxième sortie d'absorbant, et une deuxième sortie de gaz résultant (20) et le deuxième microcanal (14) est agencé selon un agencement à contre-courant par rapport au premier microcanal (12) ;
ladite méthode comprenant le fait d'amener un mélange gazeux dans le dispositif de traitement en le faisant passer par l'entrée de flux d'alimentation (16) ;
de faire circuler un absorbant liquide dans le premier microcanal (12) et le deuxième microcanal (14) ;
de mettre ledit mélange gazeux en contact avec ledit absorbant liquide pendant qu'ils se trouvent à l'intérieur du premier microcanal (12) afin d'absorber au moins une portion d'un premier composant du mélange gazeux grâce à l'absorbant liquide, créant de ce fait un premier mélange résultant comportant un premier gaz résultant et l'absorbant liquide ;
de diriger le premier gaz résultant de manière à l'éloigner de l'absorbant liquide et le faire passer par la première sortie de gaz résultant (18) ;
de désorber au moins une partie du premier composant de l'absorbant liquide pendant qu'ils se trouvent à l'intérieur du deuxième microcanal (14), créant de ce fait un deuxième mélange résultant comportant un deuxième gaz résultant et l'absorbant liquide ;
de diriger le deuxième gaz résultant de manière à l'éloigner de l'absorbant liquide et le faire passer par la deuxième sortie de gaz résultant (20) ;
dans laquelle l'absorbant liquide a une température T1 au niveau de la première entrée,
une température T2 au niveau de la première sortie, une température T3 au niveau de la deuxième entrée, et une température T4 au niveau de la deuxième sortie ;
dans laquelle :

(i) au moins l'une des conditions suivantes est satisfaite : T2 est supérieure à T3 et T1 est supérieure à T4 ; ou
(ii) au moins l'une des conditions suivantes est satisfaite : T3 est supérieure à T2, T4 est supérieure à T1, et T2 est supérieure à T4.

**2.** La méthode selon la revendication 1, dans laquelle au moins l'une des conditions suivantes est satisfaite : T2 est supérieure à T3 et T1 est supérieure à T4.

**3.** La méthode de la revendication 2, dans laquelle l'absorbant liquide a une constante de la loi d'Henry qui augmente avec la température ; et dans laquelle T4 est supérieure à T2.

**4.** La méthode de la revendication 2, dans laquelle le mélange gazeux comporte de l'azote et du dioxyde de carbone, le premier gaz résultant a une concentration en azote plus élevée que le mélange gazeux, et le deuxième gaz résultant a une concentration en dioxyde de carbone plus élevée que l'alimentation en gaz effluents.

**5.** La méthode de la revendication 2, dans laquelle le mélange gazeux comporte au moins un hydrocarbure et de l'azote, le premier gaz résultant a une concentration en azote plus élevée que le mélange gazeux, et le deuxième gaz résultant a une concentration en cet au moins un hydrocarbure plus élevée que le mélange gazeux.

**6.** La méthode de la revendication 2, dans laquelle le mélange gazeux comporte au moins un hydrocarbure et au moins un contaminant, le premier gaz résultant a une concentration en cet hydrocarbure plus élevée que le mélange gazeux, et le deuxième gaz résultant a une concentration en ce contaminant plus élevée que le mélange gazeux.

7. La méthode de la revendication 6, dans laquelle le mélange gazeux est une alimentation en gaz naturel et le contaminant est au moins soit H2S, soit un thiol, soit un autre composé contenant du soufre.

8. La méthode de la revendication 7, comprenant en outre un premier réacteur Fischer-Tropsch, où l'entrée de flux d'alimentation est couplée à une sortie du réacteur Fischer-Tropsch.

9. La méthode de la revendication 2, dans laquelle au moins l'une des conditions suivantes est satisfaite : une différence entre T1 et T4 est inférieure à 10 °C et une différence entre T2 et T3 est inférieure à 10 °C.

10. La méthode de la revendication 1, dans laquelle au moins l'une des conditions suivantes est satisfaite : T3 est supérieure à T2, T4 est supérieure à T1, et T2 est supérieure à T4.

11. La méthode de la revendication 10, dans laquelle le mélange gazeux comporte de l'azote et de l'oxygène, le premier gaz résultant a une concentration en azote plus élevée que le mélange gazeux, et le deuxième gaz résultant a une concentration en oxygène plus élevée que le mélange gazeux.

12. La méthode de la revendication 10, dans laquelle le mélange gazeux comporte au moins un hydrocarbure et au moins un contaminant, le premier gaz résultant a une concentration en cet hydrocarbure plus élevée que le mélange gazeux, et le deuxième gaz résultant a une concentration en ce contaminant plus élevée que le mélange gazeux.

13. La méthode de la revendication 12, dans laquelle le mélange gazeux est une alimentation en gaz naturel et le contaminant est au moins soit H2S, soit un thiol, soit un autre composé contenant du soufre.

14. La méthode de la revendication 10, dans laquelle au moins l'une des conditions suivantes est satisfaite : une différence entre T1 et T4 est inférieure à 10 °C, et une différence entre T2 et T3 est inférieure à 10 °C.

15. La méthode de n'importe laquelle des revendications 1 à 14, dans laquelle l'absorbant liquide comprend un liquide ionique.

FIG. 1

FIG. 2

FIG. 3

**FIG. 4**

FIG. 5

FIG. 6

Liquid sorbent jet
(feed)

_70_

_71_

Liquid level
sensor

_78_

Gas mixture
(feed)

g

Mixer or
processing
microchannel

Entrained _72_
gas film

Hydrophobic membrane
separator or other gas-
liquid separator

_74_

_80_

Anti-bubbles

Gas residual

_To recycle or other downstream process_

_To desorption or other downstream process_

_76_

Sorbent liquid containing
absorped gas components

(Not to scale the size)

FIG. 7

FIG. 8

*120*

*122*

Ring-like liquid feed channel

*128*

*126*

Liquid

Gas

Hydrophilic apertured or porous wall

*124*

Hydrophobic apertured or
porous end wall or membrane

FIG. 9

*140*

*144*

*146* *146* *146* *146* *146* *146*

Liquid

Gas

Location of liquid votex

*142*

FIG. 10

Flow

160

164

Microchannel
Process

162

Flow

FIG. 11

PRIOR ART

CH4    N2    *160* CH4 + N2

*164*    *162*

Microchannel reactor

Coolant loop

Pump

FIG. 12

PRIOR ART

FIG. 13

non-sorbed gas

*304*

*300*

T1 process

entrain the liquid in the
gas ==> gas provides
momentum

high pressure feed gas

*302*

gravity
fall

*306*

product gas

*308*

pump
overcomes
height diff

rho x g x h

T2 process
T2>T1

FIG. 14

FIG. 15

CO2
+ heat    342
N2
IL
hot end
348    346
340
cold end
344
- heat
Flue gas

FIG. 16

45

342

IL

N2

346

Absorption at T1

-heat

Flue gas

344

heat exchanger

+heat

348

Desorption at T2

T2>T1

Carbon dioxide, removed top, bottom, or middle of apparatus

FIG. 17

FIG. 18

420

FIG. 19.

440

FIG. 20

FIG. 21

**FIG. 22**

FIG. 23

**FIG. 24**

FIG. 25

FIG. 26

FIG. 27

nitrogen reject          512          methane/nitrogen feed
                518 ↑   ⌒             516
pump
        T2=10 C                       T1=50 C

        cold                          hot                    + Heat

- heat  T3=5 C                        T4=45 C

510     514                           520

                                      methane product

FIG. 28

methane  + heat

N2 with some CH4 and others

IL

536  hot end

534

532

cold end

Feed (CH4, N2, others)

- heat

530

FIG. 29

**N2 and some CH4 and others**

IL

_532_

Absorption at T1

Feed (CH4, others, N2)

-heat

heat exchanger _536_

+heat

_534_

Desorption at T2

T2>T1

methane product
removed at top, bottom or between

FIG. 30

FIG. 31

FIG. 32

FIG. 33

**Multi-phase outlet**

556 gas

556

liquid

558     550            FIG. 34

FIG. 35

FIG. 36

FIG. 37

FIG. 38

FIG. 39

576

578

pressure
tap or alternate
port inlet

port
plug

FIG. 40

572    572

feed ports

570

FIG.   41

vapor removal port — 614

610

mixed phase

liquid removal port

608

FIG. 42

FIG. 43

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 7051540 B
- US 6875247 B
- US 20070085227 A
- US 20070017633 A
- US 20060073080 A
- US 6579343 B
- US 6623659 B
- US 20060251558 A
- WO 0234863 PCT
- WO 2005105665 A
- US 2005265915 A
- US 2003221554 A

**Non-patent literature cited in the description**

- **MATTHEW W. LOSEY et al.** Microfabricated Multiphase Packed-Bed Reactors: Characterization of Mass Transfer and Reactions. *Ind. Eng. Chem. Res.,* 2001, vol. 40, 2555-2562
- **ANTHONY, J. ; MAGINN, E. ; BRENNECKE, J.** Solubilities and Thermodynamic Properties of Gases in the Ionic Liquid 1-n-Butyl-3-methylimidazolium Hexafluorophosphate. *J. Phys. Chem B,* 2002, vol. 106, 7315-7320
- **WU, W. ; HAN, B. ; GAO, H. ; LIU, Z. ; JIANG, T. ; HUANG, J.** Desulfurization of flue gas: SO2 absorption by an ionic liquid. *Angew. Chem. Int. Ed.,* 2004, vol. 43, 2415-2417
- **ANDERSON, J.L. ; DIXON, J.K ; MAGINN, E.J. ; BRENNECKE, J.F.** Measurement of SO2 solubility in ionic liquids. *The Journal of Physical Chemistry B,* 2006, vol. 110 (31), 15059-15062
- **STEMMET,C.P. ; JONGMANS, J.N. ; VAN DER SCHAAF, J. ; KUSTER, B.F.M. ; SCHOUTEN, J.C.** Hydrodynamics of gas-liquid counter-current flow in solid foam packings. *Chemical Engineering Science,* 2005, vol. 60, 6422-6429
- **STEMMET,C.P. ; VAN DER SCHAAF, J. ; KUSTER, B.F.M. ; SCHOUTEN, J.C.** Solid Foam Packings for Multiphase Reactors - Modelling of Liquid Holdup and Mass Transfer. *Trans. ChemE, Part A, Chemical Engineering Research and Design,* 2006, vol. 84 (A12), 1134-1141
- **STEMMET,C.P. ; MEEUWSE, M. ; VAN DER SCHAAF, J. ; KUSTER, B.F.M. ; SCHOUTEN, J.C.** Gas-liquid mass transfer and axial dispersion in solid foam packings. *Chemical Engineering Science,* 2007, vol. 62, 5444-5450
- **BIRD. B. ; STEWART, W.E. ; LIGHTFOOT, E.N.** Transport Phenomena. 1960, 35-41
- **ANTHONY ; MAGINN ; BRENNECKE.** Solubilities and Thermodynamic Properties of Gases in the Ionic Liquid 1-n-Butyl-3-methylimidazolium Hexafluorophosphate. *J. Phys. Chem. B.,* 2002, vol. 106 (29